**Europäisches Patentamt**

**European Patent Office**

**Office européen des brevets**

(19)

(11) Veröffentlichungsnummer : **0 185 233**
**B1**

(12) # EUROPÄISCHE PATENTSCHRIFT

(45) Veröffentlichungstag der Patentschrift :
19.07.89

(21) Anmeldenummer : 85115152.2

(22) Anmeldetag : 29.11.85

(51) Int. Cl.⁴ : **B 23 K 26/10**, B 23 K 26/02

(54) **Führungsvorrichtung für einen Laserstrahl zur dreidimensionalen Werkstückbearbeitung.**

(30) Priorität : 03.12.84 DE 3444045
01.02.85 DE 3503401

(43) Veröffentlichungstag der Anmeldung :
25.06.86 Patentblatt 86/26

(45) Bekanntmachung des Hinweises auf die Patenterteilung : 19.07.89 Patentblatt 89/29

(84) Benannte Vertragsstaaten :
AT BE CH DE FR GB IT LI NL SE

(56) Entgegenhaltungen :
DE—A— 2 652 814
GB—A— 2 074 084
GB—A— 2 120 202
GB—A— 2 134 071
US—A— 3 528 424

(73) Patentinhaber : MESSER GRIESHEIM GMBH
Hanauer Landstrasse 330
D-6000 Frankfurt/Main 1 (DE)

(72) Erfinder : Röder, Walter
Vilbeler Landstrasse 41
D-6000 Frankfurt/M. 64 (DE)

## Beschreibung

Die Erfindung bezieht sich auf eine Führungsvorrichtung für einen mehrfach an 45°-Spiegeln umgelenkten Laserstrahl zur dreidimensionalen Werkstückbearbeitung, mit fünf gesteuerten Bewegungsachsen, von denen die erste und zweite Bewegungsachse die horizontalen Koordinatenachsen X und Y sind, die dritte und vierte Bewegungsachse koaxial in einer drehbaren und längenveränderbaren vertikalen Teleskopeinrichtung od. dgl. verwirklicht sind und die fünfte Bewegungsachse eine horizontale Schwenkachse ist, um welche der Laserkopf schwenkbar ist, wobei ab der dritten Bewegungsachse eine selbsttragende Ausbildung vorgesehen ist. Unter einer selbsttragenden Ausbildung soll eine Vorrichtung werstanden werden, bei der die die Bewegung bewirkenden Bauteile und die den Laserstrahl führenden Bauteile nicht getrennt ausgebildet und dann Seite an Seite miteinander verbunden sind, sondern zu einer einheitlichen den Laserstrahl zentral führenden Konstruktion zusammengefaßt sind.

Derartige Führungsvorrichtungen werden an Laser-Schneidanlagen für durch Laser schneidbare Werkstoffe von durch Laser schneidbarer Dicke eingesetzt und erlauben aufgrund ihrer fünf Bewegungsfreiheitsgrade die Anbringung von Schnitten und Durchbrüchen auch an dreidimensionalen Werkstücken.

Eine bekannte Laser-Schneidvorrichtung dieser Gattung (DE-PS 30 11 244) ermöglicht Laserschnitte an dreidimensionalen hohlen und ggf. flexiblen Formteilen, die zu diesem Zweck formschlüssig auf eine dem Formteil komplementäre Stützform aufgesetzt sind.

Wenn mit der bekannten Vorrichtung Schnitte in gegenüber der Horizontalen im Winkel angeordneten Werkstückbereichen vorzunehmen sind, wird der Laserkopf im gewünschten Winkel zur Oberfläche des betreffenden Werkstückbereichs eingestellt. Im Interesse einer gleichmäßigen Fugenbreite der Schnittfugen bei möglichst hoher Vorschubgeschwindigkeit bzw. Schnittleistung wird der Laserkopf zweckmäßig senkrecht zur Werkstückoberfläche eingestellt. In jedem Falle wird hierbei der Laserkopf um seine horizontale Schwenkachse verschwenkt, wodurch der Auftreffpunkt, d. h. der Punkt des Auftreffens des Laserstrahls auf die Werkstückoberfläche, außerhalb der senkrechten Achse der Teleskopeinrichtung liegt. Aber auch bei senkrechter Einstellung des Laserkopfes liegt dessen Mittelachse wegen der erforderlichen zweimaligen Strahlumlenkung an der Laserkopfschwenkachse versetzt zur Achse der Teleskopeinrichtung wodurch auch im einfachsten senkrechten Anwendungsfall der Führungsvorrichtung der Auftreffpunkt außerhalb der Teleskopachse liegt.

Diese Lage des Auftreffpunkts erschwert die Erstellung eines Programms für die rechnergesteuerte Bewegung des Laserkopfes und seiner Führungsvorrichtung erheblich. Darüber hinaus muß die Führungsvorrichtung, da sie das Werkstück außen, d. h. außerhalb der Schnittfuge, umfährt, erhebliche Fahrwege zurücklegen und bei Konturübergängen am Werkstück, beispielsweise beim Übergang des Auftreffpunktes aus einer geraden in eine gekrümmte Bewegungsbahn, mit variierenden Geschwindigkeiten bewegt werden, damit der Vorschub am Schneidpunkt wegen der gewünschten gleichmäßigen Schnittfugenbreite möglichst konstant bleibt.

Sollen mit der bekannten Vorrichtung Durchbrüche in horizontale und/oder nichthorizontale Werkstückbereiche geschnitten werden, so ist bei horizontal liegenden Durchbrüchen die Führungsvorrichtung in den X- und Y-Bewegungsachsen und bei nichthorizontal liegenden Durchbrüchen zusätzlich noch in der senkrechten Z-Bewegungsachse zu bewegen, wenn ein bestimmter Laserauftreffwinkel auf die Werkstückoberfläche eingehalten werden soll.

Führungsvorrichtungen der in Rede stehenden Art sind nicht nur für Laser-Schneidanlagen, sondern grundsätzlich auch für Laser-Schweißanlagen sowie für Anlagen, bei denen mit Hilfe des Laserstrahls Materialabtragungen an Werkstückoberflächen, beispielsweise für Gravuren u. dgl., vorgenommen werden, geeignet. Wenn nachfolgend auch nur von Laserschnitten die Rede ist, so läßt sich die erfindungsgemäße Vorrichtung doch für alle Laseranwendungsfälle einsetzen, bei denen es darauf ankommt, Laserkopf und Werkstück relativ zueinander präzise geführt zu bewegen.

Der Erfindung liegt die Aufgabe zugrunde, eine Führungsvorrichtung für einen Laserstrahl bereitzustellen, welche die Bearbeitung von zwei- und dreidimensionalen Werkstücken bei erleichterter Programmierbarkeit des Bewegungsablaufs, kurzen Fahrwegen und unter Einhaltung gleichmäßiger Schnittfugen erlaubt. Unter « zweidimensionalen » Werkstücken werden für die Zwecke dieser Anmeldung solche verstanden, die in einer Horizontalebene im wesentlichen flachliegend ausgebildet sind.

Die gestellte Aufgabe wird ausgehend von der eingangs bezeichneten Gattung erfindungsgemäß dadurch gelöst, daß mindestens eine weitere als horizontale Schwenkachse ausgebildete Bewegungsachse parallel zu der Laserkopfschwenkachse vorgesehen ist, deren Abstand zur Laserkopfschwenkachse größer ist als die Länge des Laserkopfes, wobei die Laserstrahlumlenkung an der zusätzlichen Schwenkachse so vorgesehen ist, daß sich die Mittelachsen der Teleskopeinrichtung und des Laserkopfes stets in einer gemeinsamen senkrechten Ebene befinden, und daß die Schwenkwinkel an der zusätzlichen Schwenkachse und der Laserkopfschwenkachse nach Maßgabe der Lage der zu bearbeitenden Werkstückoberfläche aufeinander abgestimmt programmier- und einstellbar sind.

Hierbei wird unter dem vereinfachenden Ausdruck « Länge des Laserkopfes » die Weglänge zwischen dem Zentrum des letzten Unlenkspiegels, d. h. der damit zusammenfallenden Laserkopfschwenkachse, und dem Auftreffpunkt verstanden.

Bei der erfindungsgemäßen Vorrichtung befinden sich beigleicher Länge der Laserstrahlumlenkwege an den Schwenkachsen die Mittelachsen der Teleskopeinrichtung und des Laserkopfes stets in einer gemeinsamen Ebene, was für die Bewegungssteuerung und -programmierung der Vorrichtung günstig ist und kürzere Fahrwege ermöglicht. Durch den angegebenen Achsabstand lassen sich zur Erreichung aller zu bearbeitenden Werkstückoberflächen an den horizontalen Schwenkachsen die Schwenkwinkel in einem erheblichen Winkelbereich einstellen, wobei stets eine senkrechte Ausrichtung des Laserstrahls zur Oberfläche des jeweiligen Werkstückbereichs möglich ist.

Unter einem « Schwenkwinkel » wird im Rahmen der vorliegenden Erfindung der Winkel zwischen der Strecklage und der Mittelachse des an die jeweils betrachtete Schwenkachse anschließenden schwenkbaren Bauteils der Führungsvorrichtung verstanden, wobei der Winkelscheitel auf der Schwenkachse liegt.

Besonders vorteilhaft für die Programmierung und Steuerung der Vorrichtung ist es, wenn die Schwenkwinkel an den horizontalen Schwenkachsen für jede Phase des Schneidvorgangs so aufeinander abgestimmt programmiert sind, daß sich der Auftreffpunkt des Laserstrahls auf der Werkstückoberfläche auf der gedachten Verlängerung der Mittelachse der Teleskopeinrichtung befindet. Durch diese Maßnahme wird erreicht, daß die Lage der senkrechten Mittelachse bezüglich der horizontalen Koordinatenachsen X und Y stets übereinstimmt mit der Lage des Auftreffpunktes auf der Werkstückoberfläche, unabhängig von der jeweiligen Winkellage der Werkstückoberfläche zur Horizontalen. Es liegt auf der Hand, daß hierdurch eine bedeutende Programmierungsvereinfachung für den automatischen Bewegungsablauf erreicht wird, weil die Lage der Mittelachse der Teleskopeinrichtung zur Grundlage der Programmierung in den horizontalen Koordinatenachsen X und Y gemacht werden kann. Bei der abgestimmten Programmierung der Schwenkwinkel wird zunächst der Schwenkwinkel des Laserkopfes nach Maßgabe des gewünschten Auftreffwinkels des Laserstrahls auf die Werkstückoberfläche festgelegt, wodurch sich dann der an der zusätzlichen Schwenkachse einzustellende Schwenkwinkel gewissermaßen komplementär ergibt. Sollen mit der erfindungsgemäßen Führungsvorrichtung zweidimensionale Schnitte durchgeführt werden, d. h. senkrechte Schnitte an flachliegenden horizontalen Werkslückbereichen, so haben die Schwenkwinkel an den Schwenkachsen den Wert Null. Seitlich zur Mittelachse der Teleskopeinrichtung versetzte Lagen des Auftreffpunkts dienen der Anbringung von besonderen Schnitten am Werkstück, beispielsweise an schwer zugänglichen Stellen desselben.

Für eine vereinfachte Durchführung von kreisbogenförmigen Schnitten in zweidimensionalen Werkstücken kann die erfindungsgemäße Führungsvorrichtung vorteilhaft so ausgebildet sein, daß die Schwenkwinkel für das Schneiden von Durchbrüchen mit wenigstens teilweisem kreisbogenförmigem Verlauf der Schnittkante in horizontalen Werkstückbereichen an der Laserkopfschwenkachse und einer benachbarten horizontalen Schwenkachse gleich groß eingestellt sind, und daß zur Erzeugung des kreisbogenförmigen Schnitts die Teleskopeinrichtung drehend angetrieben ist. Bei dieser ebenfalls vorprogrammierbaren übereinstimmenden Schwenkwinkelanordnung verlaufen die Mittelachse der drehenden Teleskopeinrichtung und die Mittelachse des Laserkopfes parallel zueinander in einen gegenseitigen Abstand, der dem Radius des zu schneiden-. den Kreisbogens entspricht. Auch hierbei befinden sich die beiden erwähnten Mittelachsen stets in einer gemeinsamen senkrechten Ebene, die sich jedoch um die Mittelachse der Teleskopeinrichtung zusammen mit dieser beim Kreisbogenschnitt dreht, Schließen sich an die kreisbogenförmige Schnittkante geradlinige Schnitte an, wie das zum Beispiel bei Langlöchern mit parallelen Seitenkanten und beidseitigem Halbkreisbogenabschluß der Fall ist, so bleibt nach Abschluß jeder Halbkreisdrehung die erläuterte übereinstimmende Schwenkwinkeleinstellung erhalten und die Führungsvorrichtung wird je nach Lage des Langlochs entweder auf der X-Achse oder Y-Achse geradlinig verfahren. Die gedachte Verlängerung der Mittelachse der Teleskopeinrichtung bewegt sich dabei. auf der Längsmittelachse des Langlochs.

Sollen mit der vorerwähnten vereinfachten Einstellung der Führungvorrichtung kreisförmige Durchbrüche in horizontal liegenden Werkstückbereichen angebracht werden, so wird die entsprechend eingestellte Führungsvorrichtung um die Mittelachse der Teleskopeinrichtung um 360° gedreht, wobei an allen anderen Bewegungsachsen keine Bewegungen erfolgen.

Die Führungsvorrichtung kann vorteilhaft so ausgebildet sein, daß bei Anordnung einer weiteren horizontalen Schwenkachse parallel zur Laserkopfschwenkachse der Laserstrahl zwischen den beiden Schwenkachsen unter Bildung einer weiteren Bewegungsachse durch eine längenveränderbar gesteuerte weitere Teleskopeinrichtung geführt ist. Hierdurch wird ein weiterer Bewegungsfreiheitsgrad gewonnen wodurch der dreidimensionale Einsatzbereich der Führungsvorrichtung noch vergrößert wird.

In einer zweiten nebengeordneten Ausbildung der Führungsvorrichtung entsprechend der eingangs angegebenen Gattung ist vorgesehen, daß parallel zur Laserkopfschwenkachse drei weitere als horizontale Schwenkachsen ausgebildete Bewegungsachsen vorgesehen sind, bei denen der Abstand zwischen der ersten und der zweiten der der Teleskopeinrichtung nachgeschalteten Schwenkachsen größer ist als die um die Länge des Laserkopfes vermehrte Summe der Abstände zwischen der zweiten und der dritten Schwenkachse und zwischen der dritten Schwenkachse und der Laserkopfachse, wobei die Laserstrahlumlenkung an allen Schwenkachsen so vorgesehen ist, daß die Mittelachsen der Teleskopeinrichtung und des Laserkopfes miteinander fluchten, wenn an allen Schwenkachsen der Schwenkwinkel den Wert Null hat, und daß zwischen der zweiten und der dritten Schwenkachse eine um 360° gesteuerte zweite Drehachse vorgesehen ist.

Diese nebengeordnete Ausführungsform der Führungsvorrichtung ermöglicht alle Arbeiten bzw. Einstellungen, wie sie zuvor mit Bezug auf die erste Ausführungsform beschrieben sind, wenn die Schwenkwinkel an der dritten Schwenkachse (gezählt von der Teleskopeinrichtung an) und an der Laserkopfschwenkachse auf den Wert Null eingestellt sind und lediglich die Schwenkwinkel an der ersten und zweiten Schwenkachse programmgesteuert werden. Zusätzlich eröffnet die nebengeordnete Ausführungsform aber die Möglichkeit, auch in gegenüber der Horizontalen schräg angeordneten Werkstückbereichen analog der bereits beschriebenen Weise vereinfacht Durchbrüche mit kreisbogenförmigem Schnittkantenverlauf zu schneiden.

Dieses erfolgt dadurch, daß für das Schneiden von Durchbrüchen mit wenigstens teilweisem kreisbogenförmigen Verlauf der Schnittkante in nichthorizontalen Werkstückbereichen die Schwenkwinkel an der ersten und zweiten Schwenkachse so eingestellt sind, daß die zweite Drehachse senkrecht zur Werkstückoberfläche ausgerichtet ist, während die Schwenkwinkel an der dritten Schwenkachse und der Laserkopfschwenkachse nach Maßgabe des Schnitthalbmessers so eingestellt sind, daß die zweite Drehachse und die Mittelachse des Laserkopfes parallel verlaufen, und daß der Laserkopf um die zweite Drehachse drehend angetrieben ist. Beim Lochschnitt entsprechend der so ausgebildeten Führungsvorrichtung sind die X-Achse, die Y-Achse, die Z-Achse und sämtliche Schwenkachsen bewegungslos.

Auch bei der zweiten nebengeordneten Ausbildung der Führungsvorrichtung kann zwischen der ersten Schwenkachse und der zweiten Schwenkachse der Laserstrahl zwischen diesen beiden Schwenkachsen unter Bildung einer weiteren Bewegungsachse durch eine längenveränderbar gesteuerte weitere Teleskopeinrichtung geführt sein. Hierdurch kann wiederum ein Höhenausgleich in senkrechter Richtung erfolgen, welcher durch die verschiedenen Winkeleinstellungen des Laserkopfes, d. h. der verschiedenen Schwenkwinkel an der Laserkopfschwenkachse, erforderlich werden kann, ohne Inanspruchnahme einer Längenveränderung in Z-Richtung an der vertikalen Teleskopeinrichtung.

Gemäß einer dritten nebengeordneten Ausführungsform der Erfindung ist vorgesehen, daß eine weitere als horizontale Schwenkachse ausgebildete Bewegungsachse parallel zu der Schwenkachse für den Laserkopf vorgesehen ist, daß zwischen der Schwenkachse für den Laserkopf und dem Laserkopf zwei zusätzliche horizontale und zu den beiden Schwenkachsen parallele Laserstrahlumlenkachsen vorgesehen sind, von denen die eine als unbewegliche Achse und die andere als Teleskopachse ausgebildet ist, daß zwischen der Schwenkachse für den Laserkopf und der benachbarten Laserstrahlumlenkachse eine um 360° gesteuerte zweite Drehachse vorgesehen ist, daß der Abstand zwischen den beiden Schwenkachsen größer ist als die um die Länge des Laserkopfes vermehrte Summe der Abstände zwischen der Schwenkachse für den Laserkopf und der dem Laserkopf benachbarten Laserstrahlumlenkachse, und daß die Laserstrahlumlenkung an den Schwenkachsen und den beiden zusätzlichen Laserstrahlumlenkachsen so vorgesehen ist, daß die Mittelachsen der Teleskopeinrichtung und des Laserkopfes miteinander fluchten, wenn an den beiden Schwenkachsen der Schwenkwinkel den Wert Null hat und die Teleskopachse nicht längenverändert ist.

Weitere bezüglich dieser Ausführungsform vorteilhafte Maßnahmen ergeben sich aus den Unteransprüchen 10 bis 12.

Mit Hilfe der drei bis jetzt erörterten nebengeordneten Ausführungsformen der Führungsvorrichtung kann erreicht werden, daß sich zur vereinfachten Programmierbarkeit des Bewegungsablaufes der Auftreffpunkt des Laserstrahls auf der Werkstückoberfläche lotrecht unterhalb der Mittelachse der eingangs erwähnten Teleskopeinrichtung befindet. Mindestens aber wird erreicht, daß sich die Mittelachsen der genannten Teleskopeinrichtung und des Laserkopfes in einer gemeinsamen senkrechten Ebene befinden, was ebenfalls für die Bewegungssteuerung und -programmierung der Vorrichtung günstig ist und kürzere Fahrwege ermöglicht. Das gilt sowohl für Laserschnitte in zweidimensionalen wie auch für solche in dreidimensionalen Werkstückbereichen. Außerdem wurden Ausführungsformen der Vorrichtung vorgeschlagen, mit deren Hilfe auf vereinfachte Weise die Anbringung von kreisbogenförmigen Laserschnitten in horizontalen und nichthorizontalen Werkstückbereichen ermöglicht wird ohne Bewegung der Vorrichtung an den Koordinatenachsen X, Y und Z. Dadurch können programmgesteuert Durchbrüche mit mindestens teilweise kreisbogenförmigem Verlauf der Schnittkanten in allen Werkstückbereichen angebracht werden.

Ausgehend von der eingangs bezeichneten Gattung ist bei der vierten Ausführungsform vorgesehen,
daß am unteren Ende der Teleskopeinrichtung ein horizontales Leitrohr angebracht ist, in welches der Laserstrahl an einem 45°-Spiegel umgelenkt ist,
daß eine weitere als horizontale Schwenkachse ausgebildete Bewegungsachse parallel zur Laserkopfschwenkachse am freien Ende des Leitrohres vorgesehen ist,
daß zwischen der Laserkopfschwenkachse und dem Laserkopf zwei zusätzliche horizontale und zu den beiden Schwenkachsen parallele Laserstrahlumlenkachsen vorgesehen sind, die entweder beide als horizontale Schwenkachsen ausgebildet sind, oder von denen eine als unbewegliche Achse und die andere als längenveränderbare Bewegungsachse ausgebildet ist,

daß zwischen der Laserkopfschwenkachse und der benachbarten Laserstrahlumlenkachse eine um 360° gesteuerte zweite Drebachse vorgesehen ist, und

daß die Laserstrahlumlenkung an den Schwenkachsen und den beiden zusatzlichen Laserstrahlumlenkachsen so vorgesehen ist, daß sich die Mittelachsen der Teleskopeinrichtung und des Laserkopfes stets in einer gemeinsamen senkrechten Ebene befinden, wenn die beiden zusätzlichen Laserstrahlumlenkachsen nicht zum Schneiden von kreisbooenförmigen Durchbrüchen eingestellt sind.

Mit Hilfe der Führungsvorrichtung nach der ersten Ausführungsform können vorteilhaft mit dem Laserkopf auch sonst nur schwer oder gar nicht zugängliche vertikale oder sogar hinterschnittene Werkstückbereiche erreicht werden, wobei sowohl Linienschnitte in allen Richtungen als auch vereinfachte Kreisbogenschnitte in programmierter Schnittführung möglich sind.

Weitere vorteilhafte oder zweckmäßige Ausgestaltungen der Führungsvorrichtung nach der vierten Ausführungsform gehen aus den Unteransprüchen 14 bis 18 hervor.

Gemäß einer fünften nebengeordneten Ausführungsform ist ausgehend von der eingangs angegebenen Führungsvorrichtung vorgesehen, daß an das untere Ende der Teleskopeinrichtung unter Bildung einer weiteren horizontalen Bewegungsachse eine zweite längenveränderbar gesteuerte Teleskopeinrichtung angeschlossen ist, in welche der Laserstrahl an einem 45°-Spiegel umgelenkt ist und an welche unter Bildung einer weiteren vertikalen Bewegungsachse eine dritte längenveränderbar gesteuerte Teleskopeinrichtung angeschlossen ist, in welche der Laserstrahl an einem 45°-Spiegel umgelenkt ist,

daß am unteren Ende der dritten Teleskopeinrichtung eine zur Laserkopfschwenkachse parallele feste Laserstrahlumlenkachse vorgesehen ist, von welcher der Laserstrahl zur Laserkopfschwenkachse umgelenkt ist,

daß zwischen der Laserkopfschwenkachse und dem Laserkopf zwei zusätzliche horizontale und zur Laserkopfschwenkachse parallele Laserstrahlumlenkachsen vorgesehen sind, die entweder beide als horizontale Schwenkachsen ausgebildet sind, oder von denen eine als unbewegliche Achse und die andere als längenveränderbare Bewegungsachse ausgebildet ist,

daß zwischen der Laserkopfschwenkachse und der benachbarten Laserstrahlumlenkachse eine um 360° gesteuerte zweite Drehachse vorgesehen ist, und

daß die Laserstrahlumlenkung an der Laserkopfschwenkachse und den drei Laserstrahlumlenkachsen so vorgesehen ist, daß sich die Mittelachsen der Teleskopeinrichtung und des Laserkopfes stets in einer gemeinsamen senkrechten Ebene befinden, wenn die beiden zusätzlichen Laserstrahlumlenkachsen nicht zum Schneiden von kreisbogenförmigen Durchbrüchen eingestellt sind.

Auch mit dieser fünften nebengeordneten Ausführungsform der Führungsvorrichtung, lassen sich, wie bereits bei der vierten Ausführungsform erwähnt wurde, Schnitte in sonst schwer oder gar nicht zugänglichen Werkstückbereichen vornehmen, wobei bei dieser fünften Ausführungsform aufgrund weiterer Bewegungsfreiheitsgrade der Führungsvorrichtung noch eine größere Anpassungsfähigkeit an die Gestalt und die räumliche Lage der zu bearbeitenden Werkstückoberflächen gegeben ist.

Vorteilhafte oder zweckmäßige Ausgestaltungen der fünften nebengeordneten Ausführungsform gehen aus den Unteransprüchen 20 bis 24 hervor.

Gemäß einer sechsten vereinfachten Ausführungsform der Führungsvorrichtung, die wiederum von der eingangs bezeichneten Gattung ausgeht, ist vorgesehen,

daß an das untere Ende der Teleskopeinrichtung eine horizontale, feste und parallel zur Laserkopfschwenkachse angeordnete Laserstrahlumlenkachse angeschlossen ist, durch welche der Laserstrahl zur Laserkopfschwenkachse umgelenkt ist,

daß zwischen der Laserkopfschwenkachse und dem Laserkopf zwei zusätzliche horizontale und zur Laserkopfschwenkachse parallele Laserstrahlumlenkachsen vorgesehen sind, die entweder beide als horizontale Schwenkachsen ausgebildet sind, oder von denen eine als unbewegliche Achse und die andere als längenveränderbare Bewegungsachse ausgebildet ist,

daß zwischen der Laserkopfschwenkachse und der benachbarten Laserstrahlumlenkachse eine um 360° gesteuerte zweite Drehachse vorgesehen ist, und

daß die Laserstrahlumlenkung an der festen Laserstrahlumlenkachse, der Laserkopfschwenkachse und den beiden zusätzlichen Laserstrahlumlenkachsen so vorgesehen ist, daß sich die Mittelachsen der Teleskopeinrichtung und des Laserkopfes stets in einer gemeinsamen senkrechten Ebene befinden, wenn die beiden zusätzlichen Laserstrahlumlenkachsen nicht zum Schneiden von kreisbogenförmigen Durchbrüchen eingestellt sind.

Auch diese sechste nebengeordnete Ausführungsform der Führungsvorrichtung bietet trotz ihres vergleichsweise einfacheren Aufbaus die grundsätzlichen Möglichkeiten der anderen nebengeordneten Ausführungsformen.

Eine vorteilhafte weitere Ausgestaltung der sechsten Ausführungsform der Führungsvorrichtung geht aus Unteranspruch 26 hervor.

Bei der vierten bis sechsten Ausführungsform kann die Anordnung vorteilhaft so getroffen sein, daß die zwischen der Laserkopfschwenkachse und der benachbarten Laserstrahlumlenkachse vorgesehene Drehachse zugleich als Teleskopeinrichtung und damit zugleich als längenveränderbare Bewegungsachse ausgebildet ist. Hierdurch wird die Anpassungsfähigkeit der Vorrichtung noch weiter erhöht.

Die Unteransprüche 28 bis 31 ermöglichen vorteilhaft bei allen nebengeordneten Ausführungsformen der Führungsvorrichtung vereinfachte Laserstrahlführungen innerhalb der Vorrichtung durch Ausschaltung für den jeweiligen Schnittverlauf nicht benötigter Laserstrahlumlenkungen, wodurch der Strahlengang verkürzt und die durch den Laserstrahl beanspruchten Umlenkspiegel geschont werden.

Der Unteranspruch 32 betrifft eine vorteilhafte Anwendung der Führungsvorrichtung für sämtliche nebengeordnete Ausführungsformen auf die Erzeugung kreisbogenförmiger konisch verlaufender Schnittkanten, wie sie für das Anbringen von Senklöchern oder das Entgraten von senkrechten Schnittkanten an kreisbogenförmigen Ausschnitten wünschenswert sein können.

Weitere Einzelheiten der Erfindung werden nachfolgend anhand der Ausführungsbeispiele darstellenden schematisierten Zeichnungen näher erläutert. Darin zeigt :

Fig. 1 eine perspektivische Gesamtdarstellung einer Laser-Schneidanlage,

Fig. 2 die Seitenansicht einer mit zwei Schwenkachsen ausgerüsteten Führungsvorrichtung gemäß der ersten Ausführungsform,

Fig. 2a eine weitere Seitenansicht der Vorrichtung bei Einstellungen der Schwenkwinkel für das Schneiden in schwer zugänglichen Werkstückbereichen,

Fig. 3 die Draufsicht auf die Vorrichtung gemäß Fig. 2 bei auf den Wert Null eingestellten Schwenkwinkeln an den beiden Schwenkachsen,

Fig. 4 die Vorderansicht der Führungsvorrichtung gemäß der Fig. 2 und 3, wiederum bei auf den Wert Null eingestellten Schwenkwinkeln der beiden Schwenkachsen,

Fig. 5 eine weitere Seitenansicht der Führungsvorrichtung gemäß der Fig. 2 bis 4, jedoch bei Einstellung der Schwenkwinkel für das Schneiden eines Durchbruchs in horizontaler Werkstücklage,

Fig. 6 eine Seitenansicht der zweiten nebengeordneten Ausführungsform mit einer Einstellung der Schwenkwinkel an den vier Schwenkachsen zur Erzeugung von Schnitten an nichthorizontalen Werkstückbereichen,

Fig. 7 eine der Fig. 6 ähnliche Seitenansicht, jedoch bei Einstellung der Schwenkwinkel an den vier Schwenkachsen für das Schneiden von Kreisbogenschnitten in nichthorizontalen Werkstückbereichen,

Fig. 8 eine Vorderansicht der Ausführungsform der Führungsvorrichtung gemäß der Fig. 6 und 7 bei Null-Wert-Einstellung aller Schwenkwinkel an allen Schwenkachsen,

Fig. 9 eine der Fig. 8 ähnliche, aber abgebrochene Vorderansicht der dritten nebengeordneten Ausführungsform in einer ersten Ausführungsvariante, und

Fig. 10 eine der Fig. 9 ähnliche abgebrochene Vorderansicht der dritten nebengeordneten Ausführungsform in einer zweiten Ausführungsvariante.

Fig. 11 eine Seitenansicht der vierten Ausführungsform der Vorrichtung mit vier Schwenkachsen und einem am unteren Ende der Teleskopeinrichtung angebrachten festen Leitrohr, eingestellt für einen Laserschnitt an einem Vertikalbereich des Werkstücks,

Fig. 12 eine weitere Seitenansicht der Vorrichtung nach Fig. 11, eingestellt für einen Laserschnitt in einem Horizontalbereich des Werkstücks,

Fig. 13 die Vorderansicht der Vorrichtung in der Einstellage gemäß Fig. 12,

Fig. 14 die abgebrochene Vorderansicht ähnlich Fig.13, jedoch mit anderer Ausgestaltung der beiden dem Laserkopf benachbarten Laserstrahlumlenkachsen,

Fig. 15 eine Seitenansicht der fünften Ausführungsform der Führungsvorrichtung mit einer an das untere Ende der Teleskopeinrichtung angeschlossenen horizontalen Teleskopeinrichtung, einer daran anschließenden senkrechten Teleskopeinrichtung, einer festen Laserstrahlumlenkachse und drei dazu parallelen Schwenkachsen, eingestellt auf einen Laserschnitt in einem Vertikalbereich des Werkstücks,

Fig. 16 die Draufsicht auf den unteren Bereich der Führungsvorrichtung entsprechend der Blickrichtung des Pfeils XVI in Fig.15,

Fig. 17 eine weitere Seitenansicht der Führungsvorrichtung gemäß Fig.15, eingestellt auf einen Laserschnitt im Horizontalbereich des Werkstücks,

Fig. 18 die Vorderansicht der Vorrichtung gemäß Fig.17,

Fig. 19 eine der Fig.18 ähnliche abgebrochene Vorderansicht mit einer anderen Ausbildung der beiden dem Laserkopf benachbarten Laserstrahlumlenkachsen,

Fig. 20 die Vorderansicht einer sechsten Ausführungsform der Führungsvorrichtung, mit einer festen Laserstrahlumlenkachse am unteren Ende der Teleskopeinrichtung und drei Schwenkachsen, dargestellt in senkrechter gestreckter Lage für den Laserschnitt in Horizontalbereichen eines Werkstücks,

Fig. 21 eine Seitenansicht der Vorrichtung gemäß Fig. 20, eingestellt für einen Laserschnitt in einem (von oben gesehen) hinterschnittenen Bereich eines Werkstücks,

Fig. 22 die Draufsicht auf den unteren Bereich der Vorrichtung in Blickrichtung des Pfeils XXII in Fig. 21,

Fig. 23 bis 25 der Fig. 22 ähnliche Draufsichten, die Modifikationen der Vorrichtung beinhalten,

Fig. 26 die Vorderansicht einer mit vier Schwenkachsen ausgerüsteten Führungsvorrichtung, dargestellt in gestreckter senkrechter Lage für den Laserschnitt an Horizontalbereichen eines Werkstücks und ausgerüstet mit Elementen zur Verkürzung des Strahlengangs durch Verschiebung von Umlenkspiegeln,

Fig. 27 eine Seitenansicht der Vorrichtung gemäß Fig. 26, jedoch mit einer anderen Ausbildung der beiden dem Laserkopf benachbarten Laserstrahlumlenkachsen, eingestellt auf einen Laserschnitt an einer schräg verlaufenden Wandung eines Werkstücks,

Fig. 28 eine abgebrochene Seitenansicht des unteren Bereichs einer Führungsvorrichtung, eingestellt auf einen Kreislochschnitt in einer vertikalen Wand eines Werkstücks, und

Fig. 29 eine der Fig. 28 ähnliche abgebrochene Seitenansicht, jedoch eingestellt auf einen Lochschnitt mit konischer Schnittkante in einer vertikalen Wandung eines Werkstücks.

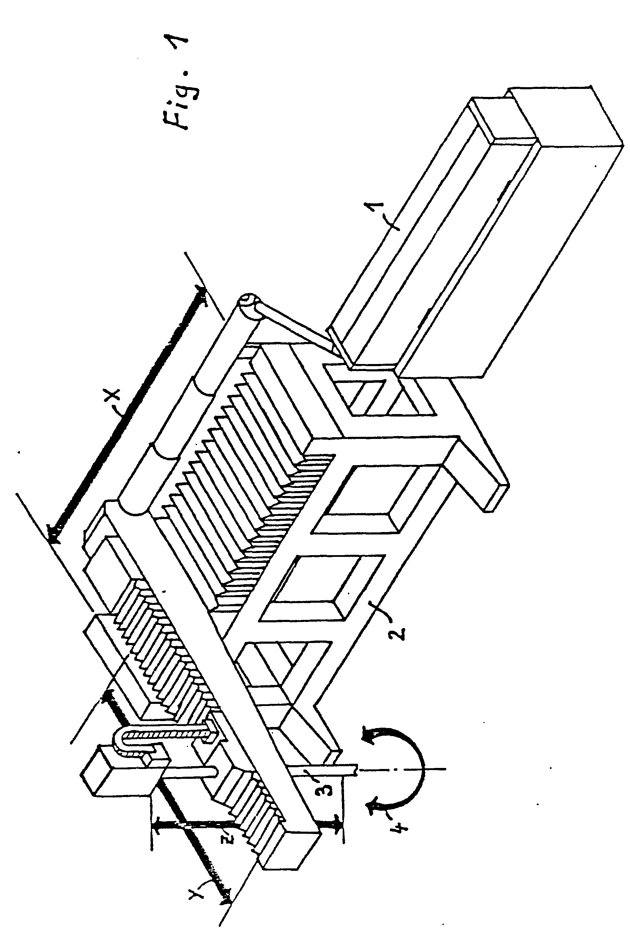

Fig. 1 veranschaulicht die Gesamtanordnung einer Laser-Schneidanlage, jedoch ohne Tisch für die Aufnahme des zu bearbeitenden Werkstücks. Außerdem ist die erfindungsgemäße Vorrichtung nicht dargestellt. Der in der $CO_2$-Lasereinheit 1 erzeugte Laserstrahl wird nach entsprechender Umlenkung parallel zur X-Bewegungsachse der dargestellten Koordinatenführungsmaschine geführt und in die Richtung der Y-Bewegungsachse und schließlich in die Richtung der Z-Bewegungsachse umgelenkt. Die Führungselemente für die X-, Y- und Z-Bewegungsachsen sind in der bei Koordinatenführungsmaschinen üblichen präzisen Ausführung am Maschinengestell 2 angebracht und durch Faltenbälge verdeckt. Stark ausgezogene Pfeile X, Y und Z markieren die zugeordneten Bewegungsachsen, nämlich die erste, zweite und dritte Bewegungsachse, und geben die möglichen Weglängen an. Der mit der Bezugszahl 4 bezeichnete Ringpfeil symbolisiert die vierte Bewegungsachse, die an der um 360° um ihre Mittelachse drehbaren Teleskopeinrichtung 3 verwirklicht ist, die in Fig. 1 an ihrem unteren Ende abgebrochen dargestellt ist.

Die Bewegungsachsen X, Y und u. U. auch Z könnten alternativ auch am nicht dargestellten Maschinentisch vorgesehen sein, so daß das Werkstück auf dem Tisch in diesen Achsen gegenüber der noch zu beschreibenden Führungsvorrichtung bewegbar ist. In diesem Fall wären die gesteuerten Bewegungsachsen zwischen dem Tisch und der Führungsvorrichtung aufgeteilt.

Leichte Lasereinheiten können auch so an der Koordinatenführungsmaschine angebracht sein, daß sie in X- und Y-Richtung mitgefahren werden, so daß nur eine Umlenkung des Laserstrahls an einem 45°-Spiegel in die Z-Achse, d. h. in die Teleskopeinrichtung 3, erforderlich ist.

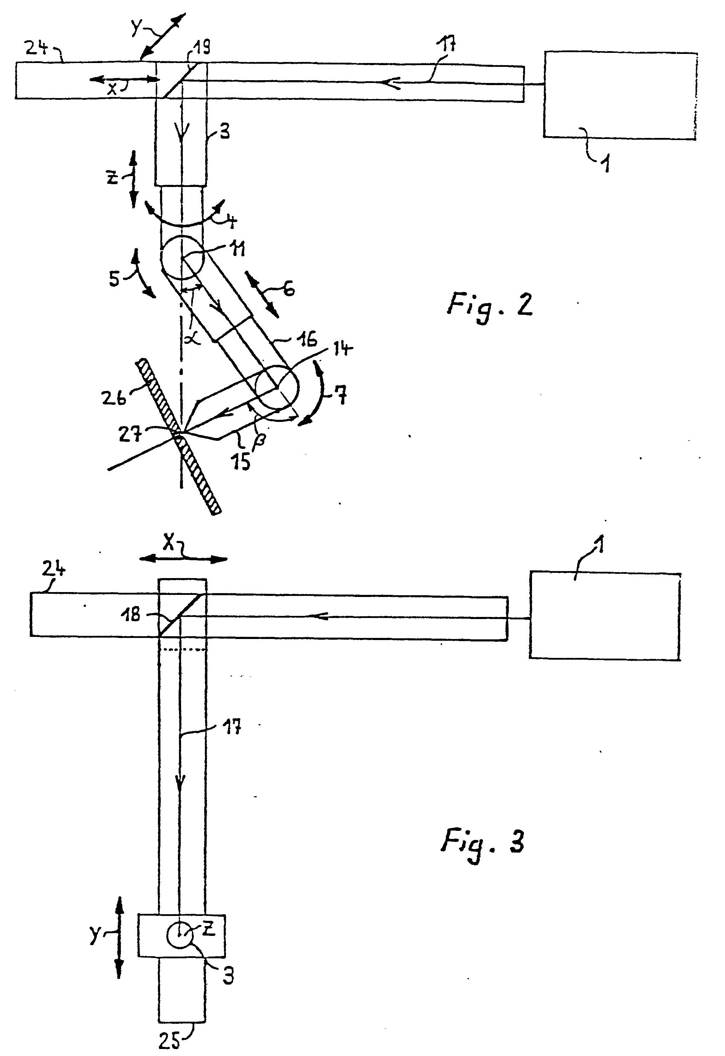

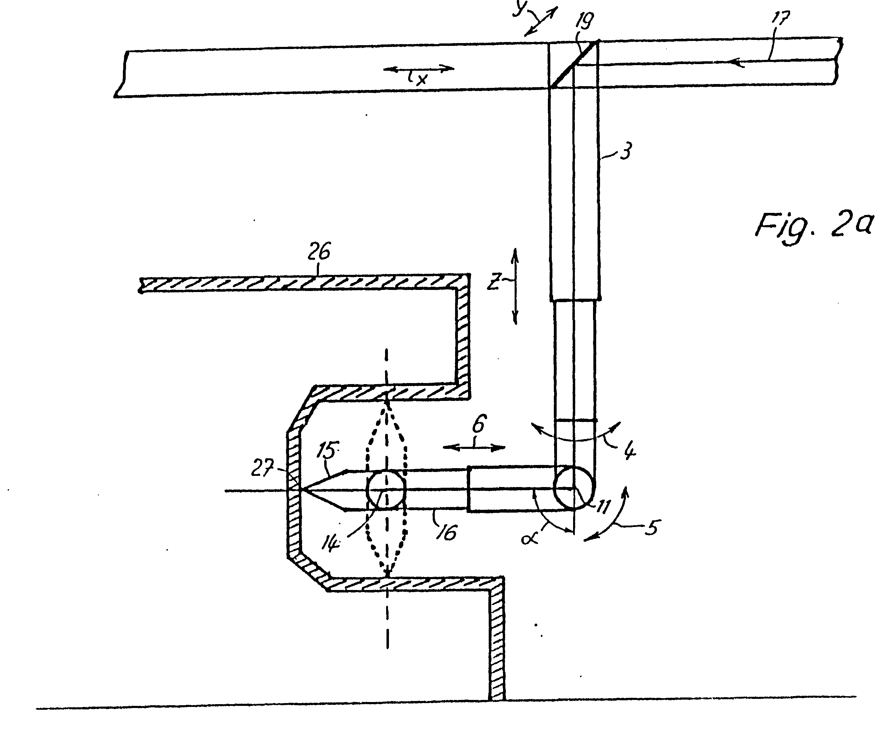

Zur Erläuterung eines ersten Ausführungsbeispiels der erfindungsgemäßen Führungsvorrichtung wird nunmehr zunächst auf die Fig. 2 bis 4 Bezug genommen. Wie daraus aufgrund der eingetragenen Pfeile X, Y, Z, 4, 5, 6 und 7 ersichtlich ist, sind sieben getrennt gesteuerte Bewegungsachsen vorgesehen. Der Pfeil 4 bezieht sich auf die Drehachse der Teleskopeinrichtung 3, die um diese Achse um 360° verdrehbar ist. Die Pfeile 5 und 7 bezeichnen Bewegungsachsen, die durch zwei Schwenkachsen 11 und 14 gebildet sind. Die Schwenkachse 14 ist die Schwenkachse des Laserkopfes 15, der die übliche nicht dargestellte Fokussiereinrichtung für den Laserstrahl einschließt.

Der Pfeil 6 repräsentiert eine zusätzliche und nicht bei allen Ausführungsformen zwingend erforderliche Bewegungsachse, die durch eine weitere längenveränderbar gesteuerte Teleskopeinrichtung 16 ermöglicht wird. Diese Teleskopeinrichtung 16 erlaubt eine Verstellung des Abstandes zwischen der Schwenkachse 11 und der Laserkopfschwenkachse 14.

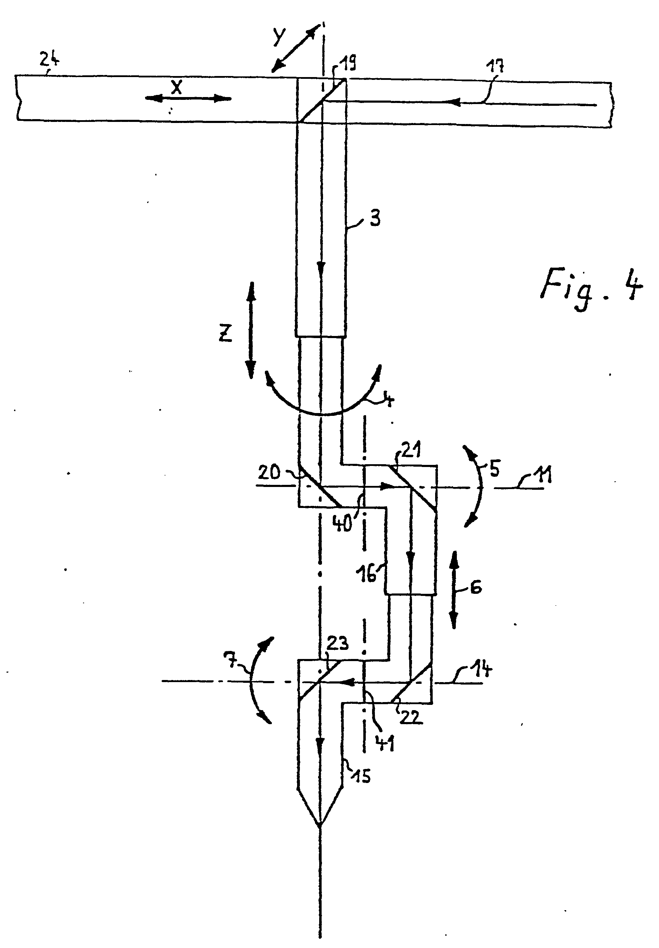

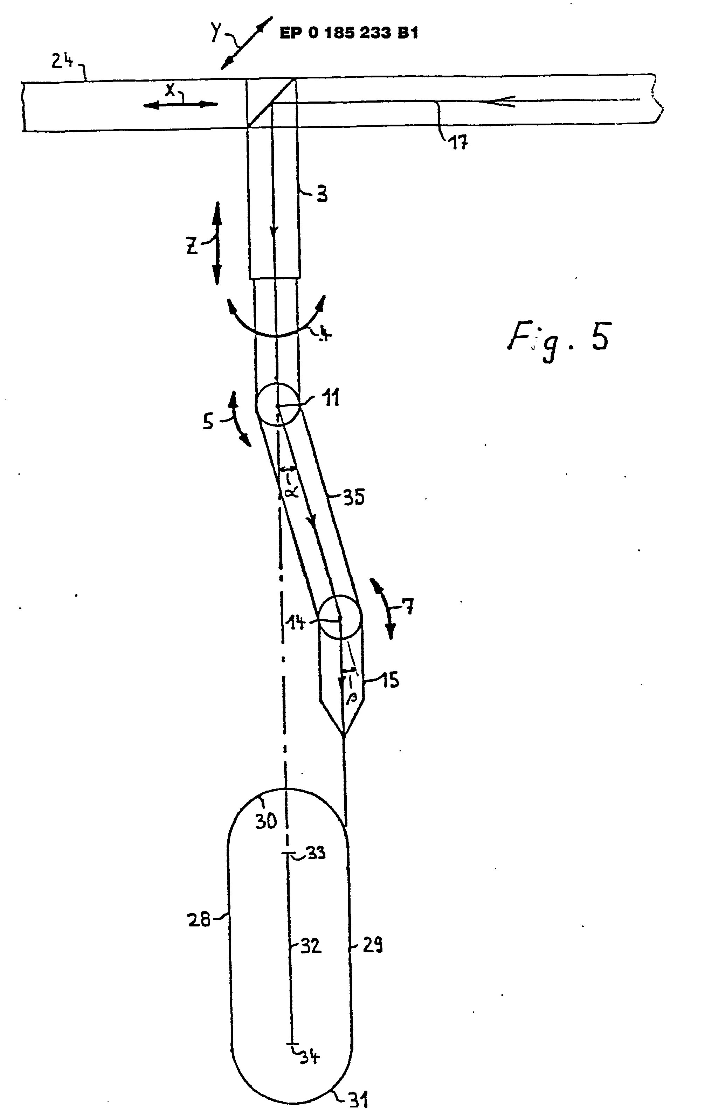

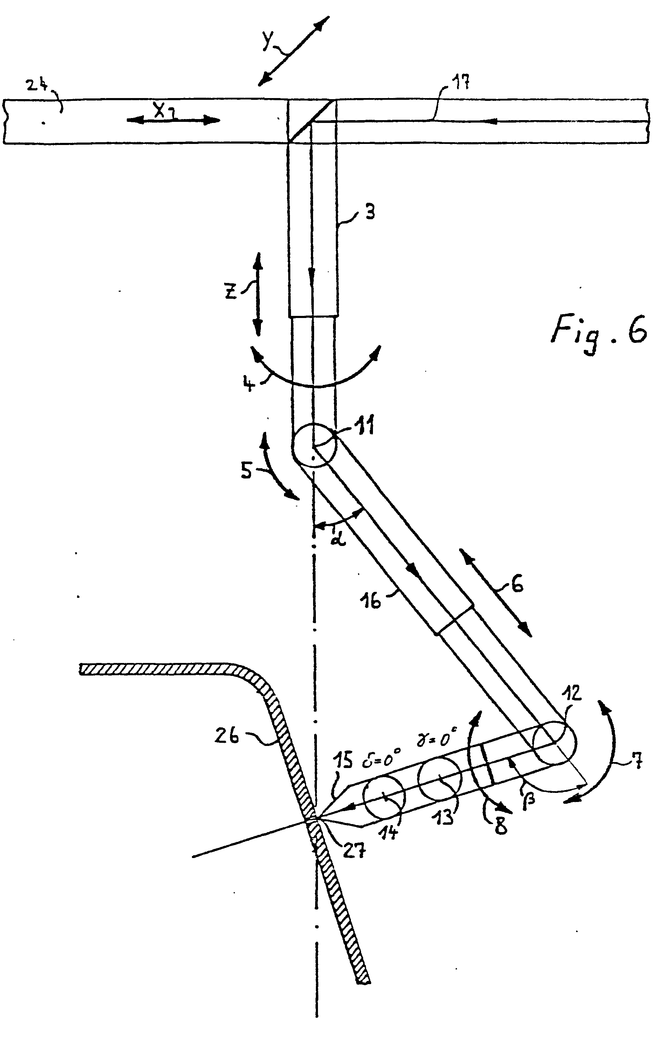

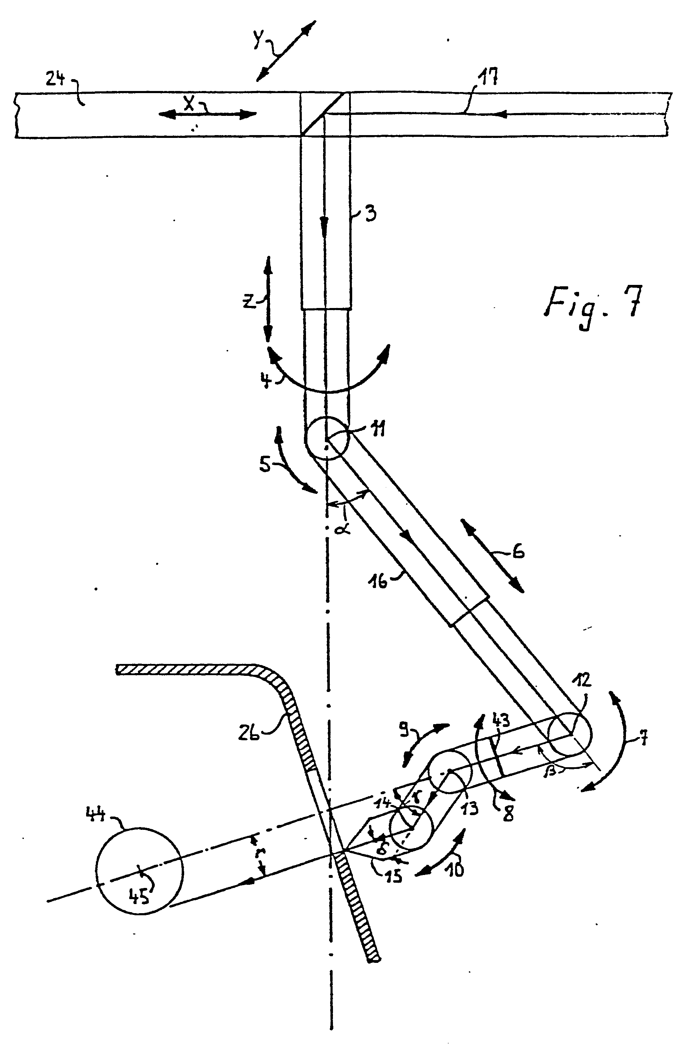

Der von der Lasereinheit 1 (Fig. 2, 3) ausgehende und mehrfach an 45°-Spiegeln umgelenkte Laserstrahl 17 ist durch einen Pfeilzug dargestellt. Wie ersichtlich ist, fällt die Mittelachse des Laserstrahls mit den Mittelachsen der Bauteile der Führungsvorrichtung zusammen. Die Umlenkung des Laserstrahls 17 von der X-Achse in die Y-Achse erfolgt am Umlenkspiegel 18 (Fig. 3). Die entsprechende Umlenkung aus der Y-Achse in die Z-Achse besorgt der Umlenkspiegel 19 (Fig. 2). Wie Fig. 4 verdeutlicht, befinden sich auf der Schwenkachse 11 zwei Umlenkspiegel 20 und 21, von denen der Spiegel 20 den Laserstrahl 17 in die Schwenkachse 11 umlenkt, während der Spiegel 21 die Umlenkung zur Laserkopfschwenkachse 14 vornimmt. Auf dieser befinden sich zwei weitere Umlenkspiegel 22 und 23, von denen der Spiegel 22 den Laserstrahl in die Schwenkachse 14 umlenkt, während der Spiegel 23 die Umlenkung in den Laserkopf 15 besorgt.

Die Geradführungen der X- und Y-Achse sind in den Fig. 2 und 3 durch die Bezugszahlen 24 und 25 bezeichnet.

Wie Fig. 4 verdeutlicht, sind die Umlenkwege des Laserstrahls zwischen den Umlenkspiegelpaaren 20, 21 und 22, 23 auf den Schwenkachsen 11 bzw. 14 gleich lang, wodurch bei der in Fig. 4 dargestellten gestreckten Lage der Führungsvorrichtung die Mittelachsen der Teleskopeinrichtung 3 und des Laserkopfes 15 versatzfrei miteinander fluchten. In dieser gestreckten Lage befindet sich der Auftreffpunkt des Laserstrahls auf der Werkstückoberfläche selbstverständlich auf der gedachten Verlängerung der Mittelachse der Teleskopeinrichtung 3. Diese gestreckte Lage wird bei zweidimensionalen Schnitten verwendet.

Bei der in Fig. 2 dargestellten Lage der Teile der Führungsvorrichtung sind die weitere Teleskopeinrichtung 16 um die Schwenkachse 11 um den Schwenkwinkel α verschwenkt, während der Laserkopf 15 um die Laserkopfschwenkachse 14 um den Winkel β verschwenkt ist. Die Winkel α und β sowie ggf. die Länge der weiteren Teleskopeinrichtung 16 sind nach Maßgabe der Schräglage der Oberfläche des abgebrochen eingezeichneten Werkstücks 26 so durch Programmsteuerung eingestellt, daß einerseits die Mittelachse des Laserkopfes 15 senkrecht zum Werkstück 26 verläuft und andererseits die gedachte Verlängerung der Mittelachse der Teleskopeinrichtung 3 durch den Auftreffpunkt 27 auf der Oberfläche des Werkstücks 26 geht, wobei sich die Mittelachse des Laserkopfes 15 und die erwähnte gedachte Verlängerung im Auftreffpunkt 27 treffen. Bei dieser Lage der Führungsvorrichtung vorgenommene Horizontalschnitte im Werkstück 26 bedürfen einer Bewegung der Führungsvorrichtung lediglich in der Y-Achse, wobei die Stellung der Z-Achse die Lage des Auftreffpunktes 27 repräsentiert, wodurch die Programmerstellung für derartige Schnitte sehr erheblich vereinfacht wird. Bei Schnitten in senkrechter Richtung erfolgt die Bewegungssteuerung durch kombinierte Bewegung an den Bewegungsachsen X und Z. Es sind aber auch beliebige dreidimensionale Schnittführungen möglich, wobei durch entsprechende Steuerung der Achsen X, Y und Z einerseits und der Bewegungsachsen 5 und 7 sowie ggf. 6 andererseits stets die in Fig. 2 dargestellte Schnittlage von Mittelachse des Laserkopfes 15 und Verlängerung der senkrechten Mittelachse der Teleskopeinrichtung im Auftreffpunkt 27 programmgesteuert eingehalten wird. Selbst wenn in bestimmten Schneidsituationen der Auftreffpunkt 27 nicht mehr auf der gedachten Verlängerung der Mittelachse der Teleskopeinrichtung 3 liegt, so befinden sich die Mittelachsen der Teleskopeinrichtung 3 und des Laserkopfes 15 doch stets auf einer gemeinsamen senkrechten Ebene, wie aus gemeinsamer Betrachtung der Fig. 2 und 4 ohne weiteres erhellt, was ebenfalls eine Vereinfachung der Programmsteuerung ermöglicht. Eine derartige Schneidsituation ist in Fig. 2a dargestellt. Hierbei ist der Laserkopf 15 bei gleichbleibendem Schwenkwinkel $\alpha = 90°$ in drei unterschiedlichen Stellungen bei $\beta = 0°$ (ausgezogene Linien) und $\beta = 90°$ (gestrichelte Linien) gezeigt, wodurch drei schwer zugängliche Flächenbereiche des Werkstücks 26 erreicht werden.

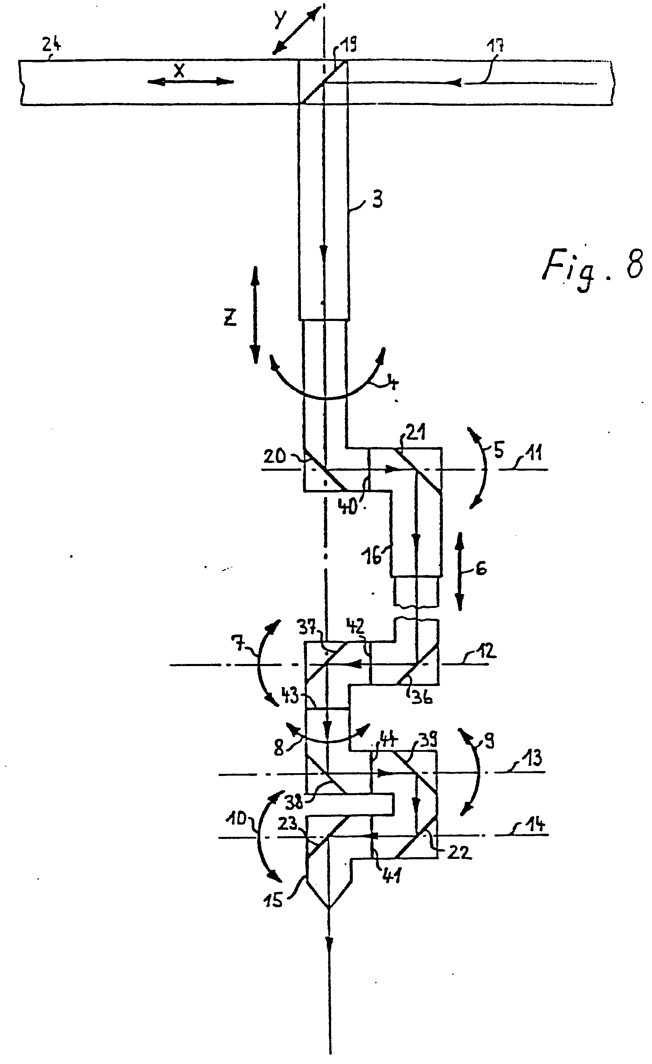

Die Vornahme eines vereinfachten Durchbruchschnittes in einer horizontalen Lage der Werkstückoberfläche mit Hilfe der in den Fig. 2 bis 4 gezeigten Führungsvorrichtung ist in Fig. 5 angegeben. Der zu schneidende Druchbruch ist lediglich in seiner Umrißlinie gezeigt und aus seiner realen horizontalen Lage zur Verdeutlichung um 90° in die Zeichenebene eingeschwenkt dargestellt. Es handelt sich um ein Langloch mit zwei parallelen Schnittkanten 28, 29 und zwei abschließenden Halbkreisschnittkanten 30, 31. Die Schwenkwinkel $\alpha$ und $\beta$ an den Schwenkachsen 11 bzw. 14 sind nach Maßgabe des gewünschten Halbmessers r der Halbkreisausschnitte programmgesteuert in gleicher Größe eingestellt, wodurch die Mittelachsen der Teleskopeinrichtung 3 und des Laserkopfes 15 um den Radius r zueinander versetzt parallel verlaufen. Die Bewegung der Führungsvorrichtung erfolgt für die Herstellung des gezeigten Langlochs nur in zwei Achsen, nämlich in der Y-Bewegungsachse und in der Drehbewegungsachse 4. Zunächst wird programmgesteuert die Mittelachse der Teleskopeinrichtung 3 auf einen der Kreismittelpunkte 33 oder 34 eingestellt, wonach durch eine 180°-Drehung an der Drehachse 4 ein Halbkreis 30 bzw. 31 eingeschnitten wird. Danach wird die Führungsvorrichtung in Richtung der Y-Bewegungsachse verfahren, bis der andere Kreismittelpunkt lotrecht unter der Mittelachse der Teleskopeinrichtung 3 liegt. Die Entfernung zwischen den Kreismittelpunkten 33 und 34 gibt den Fahrweg der Mittelachse der Teleskopeinrichtung 3 an. Nach Beendigung der geradlinigen Bewegung wird durch eine nochmalige 180°-Drehung an der Bewegungsachse 4 der noch fehlende Halbkreis geschnitten. Bei Kreisausschnitten sind weder Bewegungen in der X-Achse noch in der Y-Bewegungsachse erforderlich, hier erfolgt ausschließlich eine Drehung um die vierte Bewegungsachse. Es ist ersichtlich, daß dadurch eine erhebliche Programmierungsvereinfachung für den Bewegungsablauf der Führungsvorrichtung erzielt wird.

Bei der in Fig. 5 gezeigten Führungsvorrichtung ist zwischen den Schwenkachsen 11 und 14 keine weitere Teleskopeinrichtung 16 vorgesehen, sondern ein rohrförmiges Verbindungsstück 35. Im übrigen ist, wie die Zeichnungen verdeutlichen, der Laserstrahl 17 durchweg im Inneren der aus rohrförmigen Teilen aufgebauten Führungsvorrichtung geführt. Die an den rohrförmigen Teilen angebrachten Stellmotore für die Stellbewegungen an den Bewegungsachsen, die unabhängig voneinander programmsteuerbar sind, sind in allen zeichnerischen Darstellungen nicht eingezeichnet. Sie entsprechen in Konstruktion, Anbringungsart und Wirkung dem Stande der Technik.

Die in den Fig. 6 bis 8 dargestellte zweite Ausführungsform der erfindungsgemäßen Führungsvorrichtung besitzt außer der Schwenkachse 14 für den Laserkopf 15 drei weitere Schwenkachsen 11, 12 und 13. Dabei sind gegenüber der Ausführungsform gemäß der Fig. 2 bis 5 die Schwenkachsen 12 und 13 zusätzlich vorgesehen. Alle Schwenkachsen 11 bis 14 sind übereinstimmend ausgebildet, wobei die erforderlichen Umlenkungen des Laserstrahls 17 auch an den Schwenkachsen 12 und 13 durch paarweise angeordnete 45°-Umlenkspiegel 36, 37 bzw. 38, 39 erfolgen. Zwischen den Schwenkachsen 11 und 12 befindet sich wiederum eine weitere Teleskopeinrichtung 16, welche eine Bewegungsachse 6 repräsentiert. Insgesamt verfügt die in Fig. 8 in gestreckter Lage dargestellte Führungsvorrichtung über zehn Bewegungsachsen, die durch die Pfeile X, Y, Z, 4, 5, 6, 7, 8, 9 und 10 angegeben sind. Die durch den Pfeil 8 bezeichnete Bewegungsachse ist eine Drehachse, die 360°-Drehungen ermöglicht. Im übrigen bezeichnen die in den Fig. 4 und 8 eingezeichneten mit den Bezugszahlen 40 bis 44 bezeichneten Querlinien die Schwenk- bzw. Drehflächen der Vorrichtungsteile, an denen die Relativbewegungen jeweils benachbarter Vorrichtungsteile erfolgen.

Wie die in Fig. 8 gezeigte gestreckte Lage der Führungsvorrichtung zeigt, fluchten die Mittelachsen der Teleskopeinrichtung 3 und des Laserkopfes 15 wiederum in dieser Lage versatzfrei. Senkrechte Schnitte an in Horizontalebenen befindlichen Werkstückoberflächen werden in dieser Lage der Vorrichtung durch Steuerung an den Bewegungsachsen X und Y vorgenommen.

Die aus Fig. 8 entnehmbaren zehn Bewegungsachsen X, Y, Z, 4, 5, 6, 7, 8, 9 und 10 ermöglichen die vereinfachte Anbringung von Durchbruchschnitten an gegenüber der Horizontalen schräg gestellten Werkstückoberflächen (Fig. 7). Bei Linienschnitten in derartigen schräg gestellten Werkstückoberflächen (Fig. 6) wird die Führungsvorrichtung ausgehend von der gestreckten Lage gemäß Fig. 8 lediglich an den Schwenkachsen 11 und 14 bezüglich der Winkel α und β verstellt, wie das mit Bezug auf Fig. 2 beschrieben wurde. Die Bewegungsachsen 8, 9 und 10 erfahren keine Einstellungsveränderung gegenüber der in Fig. 8 gezeigten Strecklage. Wie ersichtlich ist, schneidet daher die Mittelachse des Laserkopfes 15 wieder die gedachte Verlängerung der Mittelachse der Teleskopeinrichtung 3 im Schneidpunkt 27 auf der Oberfläche des Werkstücks 26, wodurch der Schneidpunkt wiederum lotrecht unterhalb der Z-Bewegungsachse liegt. Fig. 6 zeigt auch, daß die weitere Teleskopeinrichtung 16 auf einen Abstand zwischen den Schwenkachsen 11 und 14 ausgefahren ist, der größer ist als der Abstand zwischen der Schwenkachse 14 und dem Schneidpunkt 27. Entsprechend liegen die Verhältnisse auch bei der noch zu erläuternden Fig. 7.

Zum Anbringen eines kreisförmigen Schnittes 44 in der gegenüber der Horizontalen schräg gestellten Oberfläche eines Werkstücks 26 werden die Winkel γ und δ an den Schwenkachsen 11 bzw. 12 so eingestellt, daß die Drehbewegungsachse 8 senkrecht zur Oberfläche des Werkstücks 26 ausgerichtet ist. Weiterhin werden ausgehend von der in Fig. 6 gezeigten Lage an den Schwenkachsen 13 und 14 gleich große Schwenkwinkel α und β nach Maßgabe der gewünschten Größe des Halbmessers r des kreisförmigen Schnitts 44 eingestellt. Zur Verdeutlichung ist der kreisförmige Schnitt 44 in Fig. 7 aus seiner realen Lage in die Zeichenebene um 90° eingeschwenkt dargestellt. Wie ohne weiteres erkennbar ist, können die Winkel γ und δ ebenso wie die Winkel α und β der Fig. 5 beliebig klein eingestellt werden, wodurch sehr kleine Radien abgefahren werden können, d. h. sehr kleine Lochdurchbrüche herstellbar sind.

Wie Fig. 7 verdeutlicht, liegt der Kreismittelpunkt 45 auf der Verlängerung der Drehbewegungsachse 8. Der kreisförmige Schnitt 44 wird ausschließlich durch eine 360°-Drehung an der Bewegungsachse 8 erzeugt, wobei alle anderen neun Bewegungsachsen bewegungslos sind.

Selbstverständlich können in gegenüber der Horizontalen schräg gestellte Oberflächen von Werkstücken auch andere geometrische Schnittfiguren mit dem Laserkopf 15 abgefahren werden, beispielsweise auch Langlöcher der in Fig.-5 dargestellten Art. Liegt hierbei die Längsachse des Langloches horizontal, so erfolgen beim Schneidvorgang nacheinander Bewegungen in der Drehachse 8 und in der Y-Achse.

Durch entsprechende Winkeleinstellung der Mittelachse des Laserkopfes 5 gegenüber der Oberfläche eines Werkstücks können auch von der Vertikalen abweichende Schnittkanten, nämlich schräg verlaufende Schnittkanten erzielt werden, wobei die Lage des Schneidpunktes ebenfalls auf der gedachten Verlängerung der Mittelachse der Teleskopeinrichtung 3 liegt, wie das in den Fig. 2 und 6 für senkrechte Schnittkanten gezeigt ist.

Beispielsweise bei kreisrunden Aussparungen sind bei den in den Fig. 5 und 7 illustrierten vereinfachten Bewegungssteuerungen auch Löcher mit konischen Schnittkanten möglich, wie sie je nach Verwendung des Werkstücks wünschenswert sein können. Hierbei erfolgt eine Verstellung der Schwenkwinkel α und β bzw. γ und δ gegenüber der in Fig. 5 bzw. Fig. 7 gezeigten Situation.

Bei der Steuerung werden die Bewegungsachsen X, Y, Z und 4 maßgenau Programmiert und die Winkelverstellungen an den durch Schwenkachsen repräsentierten Bewegungsachsen 5 und 7 bzw. 5 bis 10 werden durch ein weiteres vorgegebenes Programm selbständig vorgenommen. Die Eingabe von Löchradien bei der vereinfachten Ausführung von Durchbrüchen in Werkstücken veranlaßt die Einstellung von Schwenkwinkeln an den betroffenen Schwenkachsen.

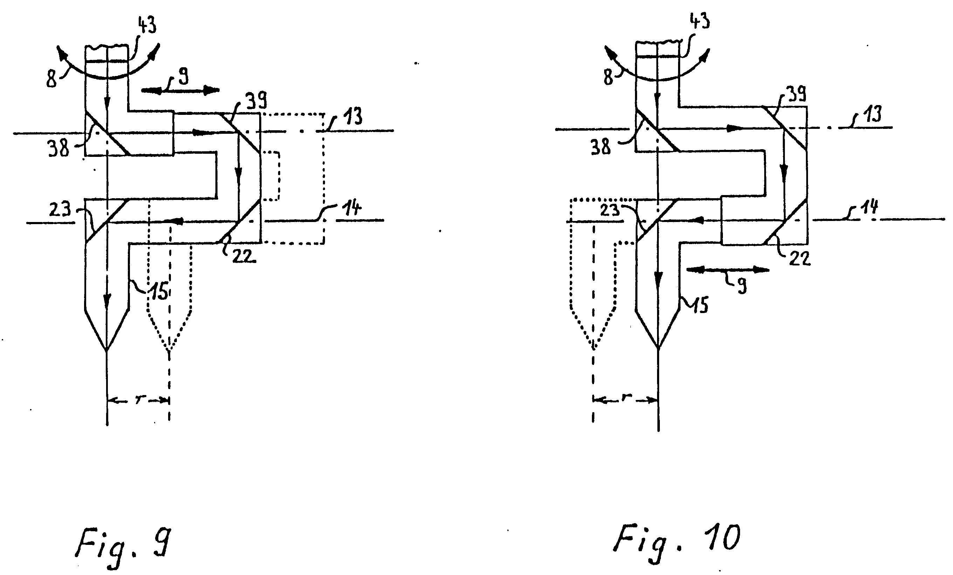

Zur Erläuterung zweier Varianten einer dritten Ausführungsform der erfindungsgemäßen Vorrichtung wird nunmehr auf die Fig. 9 und 10 Bezug genommen. Bei dieser Ausführungsform sind die Achsen 13 und 14 keine Schwenkachsen, wie bei der Ausführungsform gemäß der Fig. 6 bis 8, sondern sind unverschwenkbare Laserstrahlumlenkachsen, von denen eine teleskopartig längenveränderbar als Bewegungsachse ausgebildet ist, wie der mit der Bezugszahl 9 bezeichnete Doppelpfeil in beiden Figuren veranschaulicht, während die jeweils andere Achse keine Längenveränderbarkeit besitzt. Die abgebrochenen Teile der Vorrichtung gemäß der Fig. 9 und 10 entsprechen denjenigen der Fig. 6 bis 8.

In Fig. 9 befindet sich die Bewegungsachse 9 auf der Achse 13, während eine Längenveränderbarkeit auf der Achse 14 nicht gegeben ist, d. h. der Abstand der beiden Umlenkspiegel 22 und 23 bleibt konstant, während sich der Abstand der Umlenkspiegel 38 und 39 bei Längenveränderungen ändert. Es ist ersichtlich, daß dadurch der Laserkopf 15 aus seiner in Fig. 9 in ausgezogenen Linien gezeigten Fluchtungslage mit der Mittelachse der nicht dargestellten Teleskopeinrichtung 3 nach rechts oder links parallel verschiebbar ist. Eine parallel verschobene Position des Laserkopfes 15 ist in gepunkteten Linien angedeutet. Auf diese Weise kann ebenfalls ein Radius r, der sehr klein sein kann, zur Erzeugung von Kreisbogenschnitten sowohl an zweidimensionalen als auch an dreidimensionalen Werkstücken eingestellt werden. Zu diesem Zweck ist lediglich eine Verschiebung auf der Bewegungsachse 9 vorzunehmen. Wird dann bei programmiert eingestelltem Radius r eine Drehung um die zweite Drehachse 8 durchgeführt, so erfolgt ein Kreisbogenschnitt durch den Laserkopf 15.

Bei der in Fig. 10 gezeigten Variante ist die Achse 13 die längenunveränderbare Laserstrahlumlenkachse, auf der sich die Umlenkspiegel 38 und 39 in einem konstanten Abstand befinden.

Auf der Achse 14 ist dagegen eine teleskopartige Verlängerungs- und Verkürzungsmöglichkeit gegeben, wodurch sich der Abstand der Umlenkspiegel 22 und 23 ändert. Auch hierbei kann der Laserstrahlkopf 15 bezüglich seiner Achse ausgehend von seiner mit der Mittelachse der nicht dargestellten Teleskopeinrichtung 3 in ausgezogenen Linien dargestellten Fluchtungslage nach rechts oder links zur Einstellung eines Halbmessers r zur Erzeugung von kreisbogenförmigen Schnitten eingestellt werden. Eine nach links verschobene Lage ist in punktierten Linien angedeutet.

Die Ausführungsform der erfindungsgemäßen Vorrichtung gemäß den Fig. 9 und 10 erlaubt die programmierte Radiuseinstellung mit nur einer einzigen linearen Bewegung auf der Bewegungsachse 9, die auf der Achse 13 oder der Achse 14 liegen kann. Mit der so ausgebildeten Führungsvorrichtung sind allerdings nur senkrecht Zur Werkstückoberfläche verlaufende kreisbogenförmige Schnittkanten möglich.

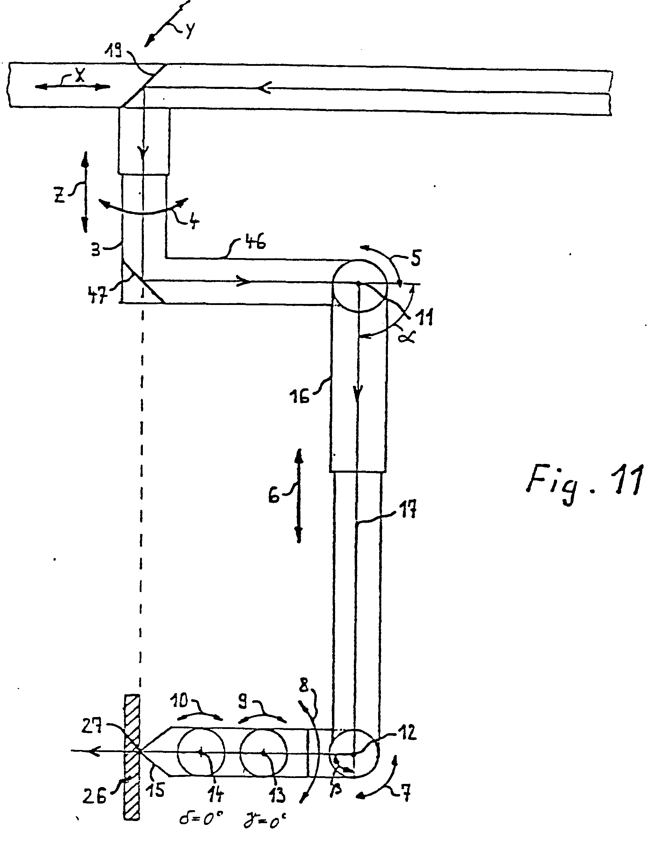

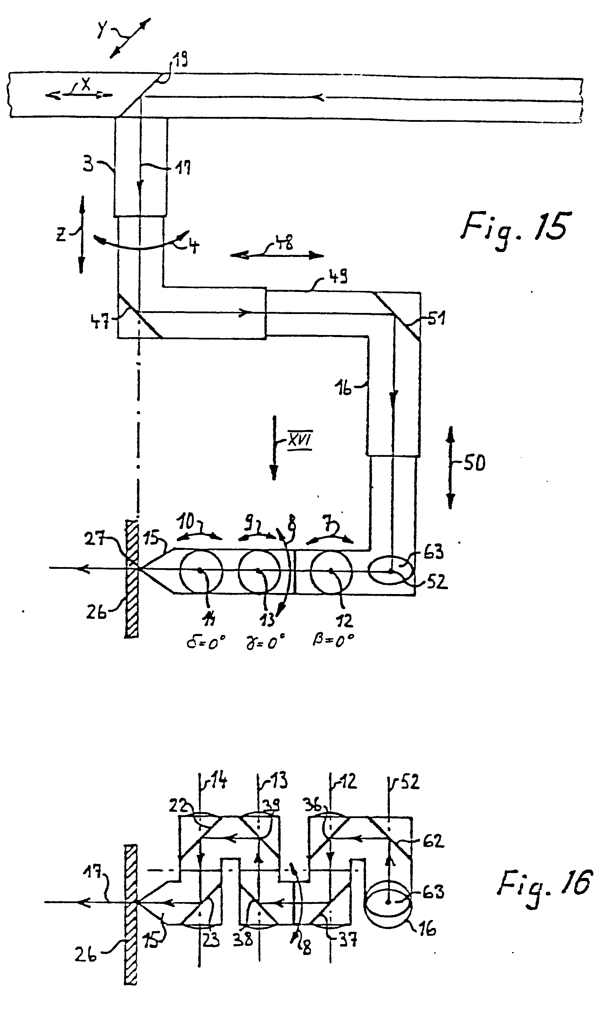

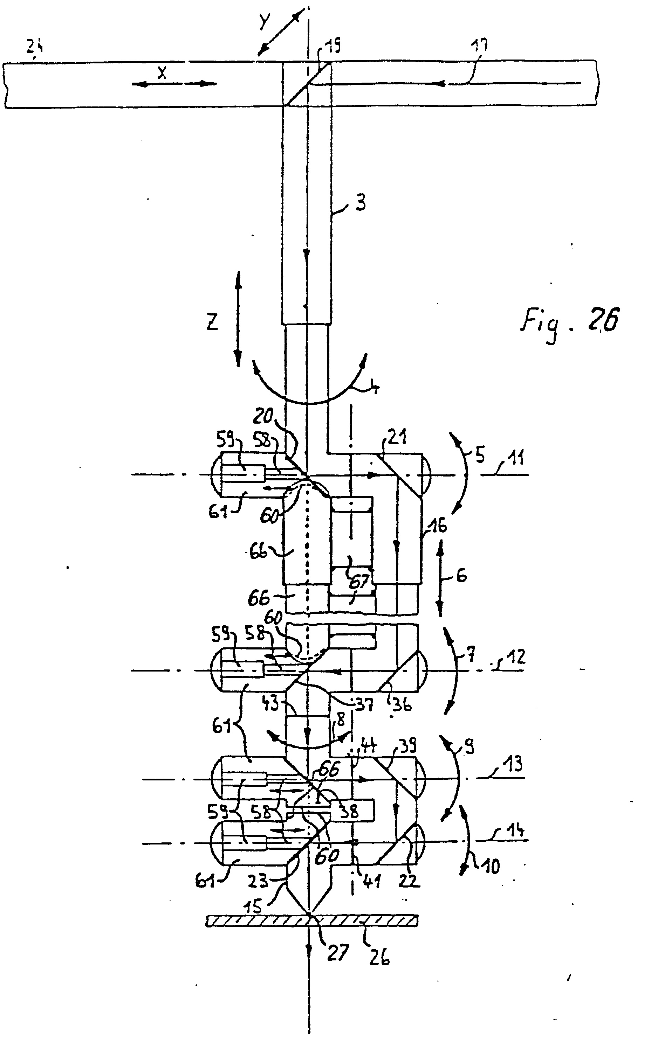

Wie ersichtlich ist, gehören die Fig. 11 bis 14 Zu einer vierten Ausführungsform der Führungsvorrichtung, während die Fig. 15 bis 19 und 20 bis 25 zu einer fünften bzw. sechsten Ausführungsform der Führungsvorrichtung gehören. Die Fig. 26 bis 29 zeigen Vorrichtungseinzelheiten, die für alle Ausführungsformen Geltung haben. In den Zeichnungen sind übereinstimmende oder vergleichbare Vorrichtungsteile mit denselben Bezugszahlen beziffert.

Zur Erläuterung des vierten Ausführungsbeispiels der Führungsvorrichtung wird nunmehr zunächst auf die Fig. 11 bis 14 Bezug genommen. Die Doppelpfeile X und Y bezeichnen die Koordinatenbewegungsachsen der Führungsmaschine (nicht dargestellt), mit deren Hilfe die vertikale Teleskopeinrichtung 3 in den Richtungen der Ebene verfahren werden kann. Der Doppelpfeil Z markiert die durch die Teleskopeinrichtung 3 gegebene senkrechte Bewegungsachse. Der Ringpfeil 4 symbolisiert die vierte Bewegungsachse, die an der um 360° um ihre Mittelachse drehbaren Teleskopeinrichtung 3 verwirklicht ist. Die Bewegungsachsen X, Y und u. U. auch Z können bei allen Ausführungsformen alternativ auch am nicht dargestellten Maschinentisch vorgesehen sein, so daß das Werkstück auf dem Tisch in diesen Achsen gegenüber der noch zu beschreibenden Führungsvorrichtung bewegbar ist. In diesem Fall wären die gesteuerten Bewegungsachsen zwischen dem Tisch und der Führungsvorrichtung aufgeteilt.

Der von der $CO_2$-Lasereinheit (nicht dargestellt) ausgehende Laserstrahl 17 wird an einem Umlenkspiegel 19 in die Teleskopeinrichtung 3 umgelenkt. Am unteren Ende der Teleskopeinrichtung 3 ist rechtwinklig ein horizontales Leitrohr 46 angebracht, in welches der Laserstrahl durch einen weiteren Umlenkspiegel 47 umgelenkt ist. Am äußeren Ende des Leitrohres 46 befindet sich eine als horizontale Schwenkachse 11 ausgebildete Laserstrahlumlenkachse, welche die durch den Pfeil 5 bezeichnete fünfte Bewegungsachse repräsentiert. Auf der Schwenkachse 11 befinden sich zwei Umlenkspiegel 20 und 21, durch welche der vom Umlenkspiegel 47 kommende Laserstrahl in die Schwenkachse 11 umgelenkt bzw. aus dieser in eine an die Schwenkachse 11 angeschlossene zweite Teleskopeinrichtung 16 umgelenkt wird, welche die durch den Doppelpfeil 6 angegebene sechste Bewegungsachse der Führungsvorrichtung bildet.

Am äußeren Ende der zweiten Teleskopeinrichtung 16 ist die Laserkopfschwenkachse 12 vorgesehen, die parallel zur Schwenkachse 11 angeordnet ist. Auf dieser Schwenkachse 12 befinden sich Umlenkspiegel 36 und 37. Parallel zu den Schwenkachsen 11 und 12 sind zwischen der Laserkopfschwenkachse 12 und dem Laserkopf 15 zwei zusätzliche horizontale Laserstrahlumlenkachsen 13 und 14 vorgesehen, die bei der Vorrichtungsausführung gemäß der Fig. 11 bis 13 als Schwenkachsen ausgebildet sind, was durch die Pfeile 9 und 10 angedeutet ist. Der der Laserkopfschwenkachse 12 zugeordnete Pfeil 7 bezeichnet die siebte Bewegungsachse der Führungsvorrichtung, während die Pfeile 9 und 10 die neunte und zehnte Bewegungsachse der beschriebenen Führungsvorrichtung bilden. Die achte Bewegungsachse wird dadurch erhalten, daß zwischen der Laserkopfschwenkachse 12 und der benachbarten Laserstrahlumlenkachse 13 eine um 360° gesteuerte zweite Drehachse 8 vorgesehen ist, die in den Zeichnungen durch einen entsprechenden Pfeil markiert ist. Auf den Laserstrahlumlenkachsen 13 und 14 befinden sich die Spiegelpaare 38, 39 bzw. 22 23. Der Laserkopf 15 schließt die übliche hier nicht dargestellte Fokussiereinrichtung für den Laserstrahl ein.

Wie aus Fig. 13 ersichtlich ist, stimmen die Weglängen des Laserstrahls an den Achsen 11 bis 14 überein, wodurch sich die Mittelachsen der Teleskopeinrichtung 3 und des Laserkopfes 15 stets in einer gemeinsamen senkrechten Ebene befinden, wenn die Drehachse 8 sich in ihrer dargestellten Nullstellung befindet, d. h. unverdreht ist. Wie insbesondere aus Fig. 11 hervorgeht, entspricht der Abstand zwischen der Mittelachse der Teleskopeinrichtung 3 und der horizontalen Schwenkachse 11 dem Abstand zwischen der Laserkopfschwenkachse 12 und dem Auftreffpunkt 27 des Laserstrahls auf der Oberfläche des Werkstücks 26. Das Werkstück 26 ist in allen Zeichnungen lediglich als abgebrochenes Wandungsteil des vollständigen Werkstücks dargestellt, das eine komplizierte dreidimensionale Formgebung haben kann. Die vorstehend erwähnte Abstandsübereinstimmung erleichtert die programmierte Einstellung des Auftreffpunktes 27 lotrecht unter der Mittelachse der Teleskopeinrichtung 3, wie in Fig. 11 für den Einstellungsfall angedeutet ist, in welchem der Laserstrahl auf eine senkrechte Oberfläche des Werkstücks 26 trifft. Hierbei hat der Schwenkwinkel α an der Schwenkachse 11 den Wert 90° während die Schwenkwinkel β, γ und δ an den Achsen 12, 13 und 14 die Werte 90° bzw. 0° haben. Die Winkel

α (Fig. 2) und β an den beiden Schwenkachsen 11 und 12 sind so aufeinander abgestimmt programmierbar, daß sich der Auftreffpunkt 27 des Laserstrahls 17 auf der Werkstückoberfläche stets auf der gedachten Verlängerung der Mittelachse der Teleskopeinrichtung 3 befindet, wenn die Schwenkwinkel γ und δ denselben Winkelbetrag 0° haben, d. h. keine Winkeleinstellung an den Schwenkachsen 9 und 10 vorliegt, oder anders ausgedrückt die Drehachse 8 mit der Mittelachse des Laserkopfes 15 fluchtet. Es ist ersichtlich, daß auf diese Weise der Auftreffpunkt 27 sich auch dann lotrecht unter der Mittelachse der Teleskopeinrichtung 3 befindet, wenn die Werkstückoberfläche schräg angeordnet ist und die Drehachse 8 senkrecht zu ihr ausgerichtet ist. Die hierdurch erzielbare Vereinfachung der Erstellung eines Computerprogramms für die rechnergesteuerte Bewegung des Laserkopfes liegt auf der Hand.

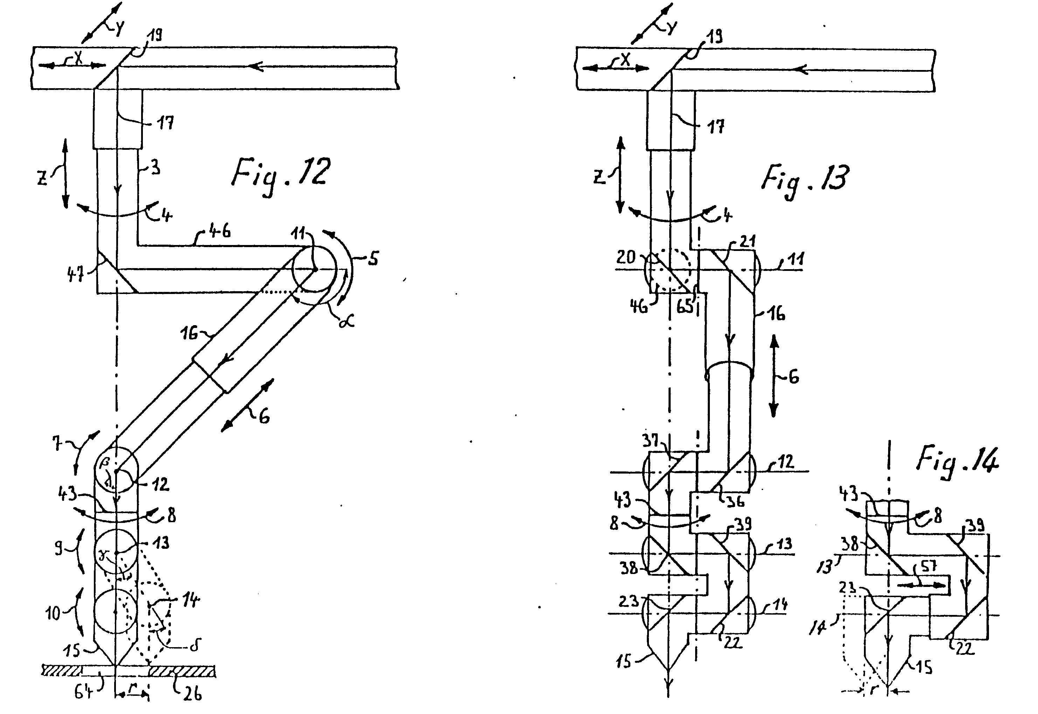

In Fig. 12 ist diejenige durch Einstellung der Schwenkwinkel α, β und der zweiten Teleskopeinrichtung 16 erzielbare Grenzlage dargestellt, in welcher die Mittelachsen der ersten Teleskopeinrichtung 3 und des Laserkopfes 15 miteinander fluchten. Diese Einstellung wird für Laserschnitte im horizontalen Werkstückbereich verwendet. Der Laserkopf 15 führt hierbei aufgrund seiner fluchtenden Einstellung alle Bewegungen aus, die von der nach den Bewegungsachsen X und Y gesteuerten Führungsmaschine für die Führungsvorrichtung vorgegeben werden. Die in Fig. 12 nicht eingetragenen Schwenkwinkel γ und δ haben übereinstimmend den Wert 0°.

Sollen von der in Fig. 12 gezeigten Lage ausgehend Durchbrüche mit wenigstens teilweisem kreisbogenförmigem Verlauf der Schnittkante in horizontalen Werkstückbereichen angebracht werden, so werden die Schwenkwinkel γ und δ an den beiden Schwenkachsen 9, 10 nach Maßgabe des Schnitthalbmessers r so eingestellt, daß die zweite Drehachse 8 und die Mittelachse des Laserkopfes 15 parallel verlaufen. Wird dann der Laserkopf 15 um die zweite Drehachse 8 drehend angetrieben, so ergibt sich auf einfache Weise der gewünschte Durchbruch.

Entsprechend sind Durchbrüche mit wenigstens teilweisem kreisbogenförmigem Verlauf der Schnittkante auch in nichthorizontalen Werkstückbereichen anzubringen. Hierzu werden die Schwenkwinkel α und β an den beiden Schwenkachsen 11 und 12 so eingestellt, daß die zweite Drehachse 8 senkrecht zur Werkstückoberfläche ausgerichtet ist. Hierbei fällt der Mittelpunkt des Kreisbogens der Schnittkante mit der Drehachse 8 zusammen. Die Winkel γ und δ werden zur Einstellung des Schnitthalbmessers r auf die bereits beschriebene Weise eingestellt, worauf der Laserkopf 15 um die zweite Drehachse 8 drehend angetrieben wird.

In Fig. 12 ist die Einstellung des Laserkopfes für das Schneiden von kreisförmigen Durchbrüchen in gestrichelten Linien angedeutet. Die in dieser Einstellung entstehende Verkürzung des vertikalen Abstandes zwischen der Umlenkachse 13 und dem Schneidpunkt wird durch entsprechendes Ausfahren der zweiten Teleskopeinrichtung 16 ausgeglichen. Entsprechend sind auch die Schwenkwinkel α und β an den Schwenkachsen 11 und 12 einzustellen, damit der Kreisbogenmittelpunkt der Schnittkante auf der gedachten Verlängerung der Mittelachse der ersten Teleskopeinrichtung 3 liegt. In Fig. 12 bezeichnet die Bezugszahl 64 einen kreisförmigen Durchbruch in der abgebrochenen horizontalen Wandung des Werkstücks 26. Die Bezugszahlen 43 und 65 (Fig. 12, 13) markieren die als Querlinien erscheinenden Dreh- bzw. Schwenkflächen zwischen benachbarten Teilen der Vorrichtung, wobei sich die Drehfläche 43 auf der Drehachse 8 befindet, während die Schwenkfläche 65 der Schwenkachse 11 zugeordnet ist.

Bei der in Fig. 14 dargestellten Teilvorrichtung sind die Achsen 13 und 14 keine Schwenkachsen, sondern sind unverschwenkbare, d. h. feste, Laserstrahlumlenkachsen, von denen eine teleskopartig längenveränderbar ausgebildet ist, mithin eine Bewegungsachse darstellt, die durch den Doppelpfeil 57 veranschaulicht ist. Eine entsprechende Teleskopverstellbarkeit wird erreicht, wenn nicht die Laserstrahlumlenkachse 14, sondern die Achse 13 als längenveränderbare Bewegungsachse 57 ausgebildet wird. Die abgebrochenen Teile der Vorrichtung in Fig. 14 entsprechen denjenigen der Fig. 11 bis 13. In Fig. 14 ist in gestrichelten Linien eine ausgezogene durch die Bewegungsachse 57 ermöglichte parallelverlagerte Stellung des Laserkopfes 15 eingezeichnet. Auch auf diese Weise kann ein Schnitthalbmesser r eingestellt werden, wodurch bei Drehantrieb der Drehachse 8 Kreislochschnitte ermöglicht werden. Auch hierbei wird die Einstellung der Gesamtvorrichtung so programmiert, daß sowohl bei Durchbruchschnitten in horizontalen als auch in nichthorizontalen Werkstückbereichen die Drehachse 8 senkrecht zur Werkstückoberfläche ausgerichtet ist und mit dem Kreisbogenmittelpunkt fluchtet.

Zur Erläuterung der fünften Ausführungsform wird nunmehr auf die Fig. 15 bis 19 Bezug genommen. Bei der daraus entnehmbaren Führungsvorrichtung ist an das untere Ende der Teleskopeinrichtung 3 eine weitere längenveränderbar gesteuerte Teleskopeinrichtung 49 angeschlossen, welche eine weitere horizontale Bewegungsachse 48 bildet, wie durch einen Doppelpfeil angedeutet ist. Am freien Ende der Teleskopeinrichtung 49 befindet sich ein Umlenkspiegel 51, welcher den Laserstrahl in eine zweite vertikale Teleskopeinrichtung 16 umlenkt, die unveränderlich parallel zu der ersten vertikalen Teleskopeinrichtung 3 ausgerichtet ist. Die dadurch erzielte vertikale Bewegungsachse 50 ist durch einen Doppelpfeil bezeichnet. Am unteren Ende dieser vertikalen zweiten Teleskopeinrichtung, die, wenn alle vorgeschalteten Teleskopeinrichtungen mitgezählt werden, eine dritte längenveränderbar gesteuerte Teleskopeinrichtung darstellt, ist eine zur Laserkopfschwenkachse 12 parallele feste Laserstrahlumlenkachse 52 vorgesehen, auf welcher sich die Umlenkspiegel 63 und 62 befinden.

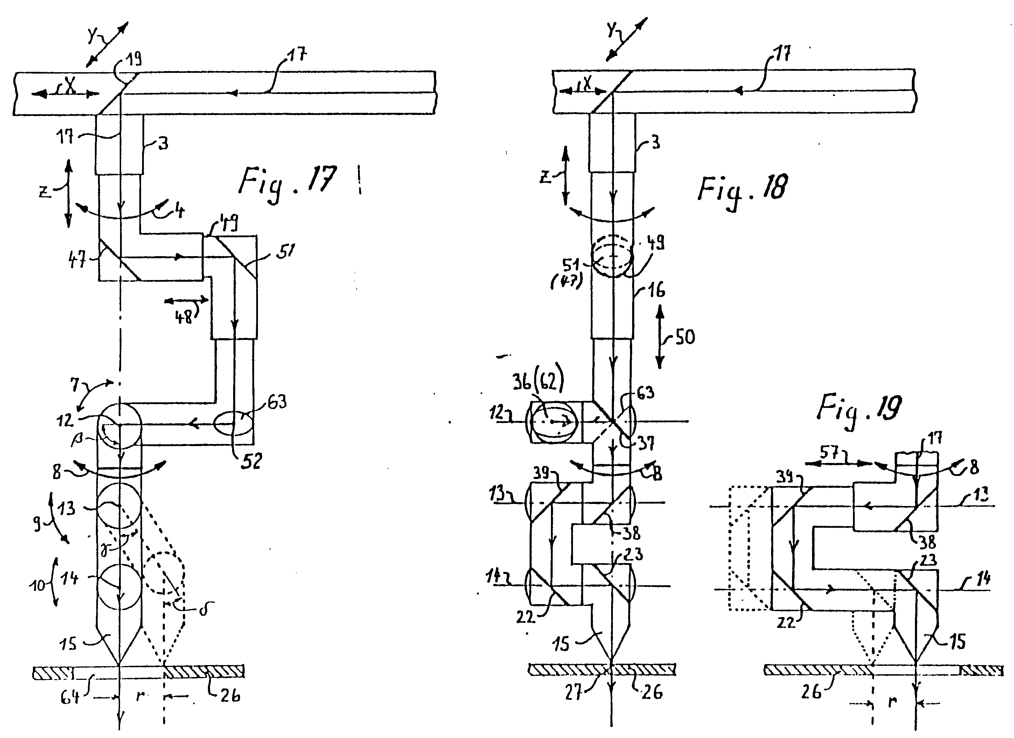

Von dieser Laserstrahlumlenkachse 52 wird der Laserstrahl zur Laserkopfschwenkachse 12 umgelenkt. Die zwischen der Laserkopfschwenkachse 12 und dem Laserkopf 15 befindlichen Vorrichtungselemente sind mit denjenigen baugleich, die mit Bezug auf die vierte Ausführungsform nach den Fig. 11 bis 14 beschrieben worden sind. Die in Fig. 19 gezeigte Variante der Vorrichtung entspricht prinzipiell derjenigen, die mit Bezug auf Fig. 14 beschrieben wurde. Allerdings ist bei der Fig. 19 die Laserstrahlumlenkachse 13 längenveränderbar, während die Laserstrahlumlenkachse 14 als unbewegliche Achse ausgebildet ist. Wie schon erwähnt wurde, wird auch dadurch die Bewegungsachse 57 zur Einstellung eines Schnitthalbmessers r ermöglicht.

Aufgrund der insoweit baugleichen Ausführung der Vorrichtung können auch mit der Führungsvorrichtung gemäß der Fig. 15 bis 19 Durchbrüche mit wenigstens teilweisem kreisbogenförmigem Verlauf der Schnittkante in allen Werkstückbereichen vorgenommen werden. Für den horizontalen Bereich ist dies durch Fig. 17 illustriert.

In Fig. 17 ist die Vorrichtung programmgesteuert so eingestellt, daß die zweite Teleskopeinrichtung 49 auf eine dem Abstand zwischen der Laserstrahlumlenkachse 52 am unteren Ende der dritten Teleskopeinrichtung 16 und der Laserkopfschwenkachse 12 entsprechende Länge gebracht ist. Wenn hierbei keine Winkeleinstellungen an den Schwenkachsen 9 und 10 vorgenommen werden, d. h. wenn die zugeordneten Schwenkwinkel γ und δ den Wert Null haben, bzw. wenn die längenveränderbare Bewegungsachse 57 nicht längenverändert ist, dann fluchten die Mittelachsen der ersten Teleskopeinrichtung 3 und des Laserkopfes 15. Werden die Schwenkwinkel γ und δ an den Schwenkachsen 9. und 10 entsprechend dem gewünschten Schnitthalbmesser r eingestellt, wie in Fig. 17 in gestrichelten Linien dargestellt ist, so fluchtet der Kreisbogenmittelpunkt mit der Drehachse 8 und der Mitelachse der ersten Teleskopeinrichtung 3. Ein Drehantrieb um die Drehachse 8 erzeugt dann beispielsweise einen kreisbogenförmigen Durchbruch 64. Der erforderliche Weglängenausgleich beim Einstellen der strichpunktierten Radiuslage des Laserkopfes 15 erfolgt mit Hilfe der zweiten Teleskopeinrichtung 16, d. h. durch Verstellung der Bewegungsachse 50.

Fig. 15 illustriert die Einstellung der Führungsvorrichtung bei Schnitten in vertikalen Wandungsbereichen des Werkstücks 26. Hierbei betragen die Schwenkwinkel β, γ und δ jeweils 0°, d. h. die Achsen 12, 13 und 14 befinden sich in einer Horizontalebene mit der festen Laserstrahlumlenkachse 52. Wie ersichtlich ist, befindet sich auch der Auftreffpunkt 27 lotrecht unter der Mittelachse der ersten Teleskopeinrichtung 3. Diese Einstellung kann auch im Interesse vereinfachter Programmierung von Schnitten in schräg liegenden Werkstückbereichen beibehalten werden, wobei der Schwenkwinkel β so eingestellt wird, daß die Drehachse 8, die bei entsprechender Einstellung der Schwenkwinkel γ und δ

mit der Mittelachse des Laserkopfes 15 fluchtet, senkrecht zu der schräg liegenden Werkstückoberfläche eingestellt ist. Durch entsprechende Verkürzung oder Verlängerung der zweiten Teleskopeinrichtung 49 an der Bewegungsachse 48 kann sichergestellt werden, daß sich der Auftreffpunkt 27 stets lotrecht unter der Mittelachse der ersten Teleskopeinrichtung 3 befindet. Bei auf der schräg liegenden Werkstückoberfläche ansteigenden oder abfallenden Schnitten ist hierbei zusätzlich auch noch die dritte Teleskopeinrichtung 16 an der Bewegungsachse 50 entsprechend zu steuern. Diese Aufgabe kann allerdings auch die erste Teleskopeinrichtung 3 durch Steuerung an der Achse Z übernehmen.

Bei der in Fig. 15 illustrierten Grenzlage der Führungsvorrichtung ist die zweite Teleskopeinrichtung 49 auf eine Länge eingestellt, die dem horizontalen Abstand zwischen der Laserstrahlumlenkachse 52 am unteren Ende der dritten Teleskopeinrichtung 16 und dem Auftreffpunkt 27 des Laserstrahls auf der Werkstückoberfläche entspricht.

An allen Laserstrahlumlenkachsen 52, 12, 13 und 14 liegen übereinstimmende Umlenkweglängen vor, so daß sich die Mittelachsen der Teleskopeinrichtung 3 und des Laserkopfes 15 stets in einer gemeinsamen senkrechten Ebene befinden, vorausgesetzt, daß die beiden zusätzlichen Laserstrahlumlenkachsen 13, 14 nicht zum Schneiden von kreisbogenförmigen Durchbrüchen eingestellt sind, bzw. wenn bei der Ausführung gemäß Fig. 19 die längenveränderbare Bewegungsachse 57 nicht längenverändert ist.

Wie aus der vorstehenden Beschreibung in Verbindung mit den zugehörigen Zeichnungen hervorgeht, ist auch die in den Fig. 15 bis 18 dargestellte zweite Ausführungsform der Führungsvorrichtung mit zehn Bewegungsachsen ausgerüstet, wenn die Koordinatenachsen X und Y mitgezählt werden, nämlich mit den Achsen X, Y, Z, 4, 48, 50, 7, 8, 9 und 10. Für viele Anwendungen kann es ausreichend sein, wenn anstelle der dritten vertikalen Teleskopeinrichtung 16 eine abstandsunveränderliche Umlenkung zwischen dem 45°-Spiegel 51 der zweiten Teleskopeinrichtung 49 und der festen Laserstrahlumlenkachse 52 vorgesehen ist. In diesem Fall sind nur neun Bewegungsachsen vorhanden. Bei Ausbildung der Vorrichtung entsprechend der Variante nach Fig. 19 ist stets eine Bewegungsachse weniger vorhanden, weil die Bewegungsachse 57 die beiden Bewegungsachsen 9 und 10 ersetzt. In jedem Falle wird der Laserstrahl 17 in der Führungsvorrichtung entsprechend der zweiten Ausführungsform an folgenden Umlenkspiegeln bis zum Austritt aus dem Laserkopf 15 umgelenkt: 19, 47, 51, 63, 62, 36, 37, 38, 39, 22 und 23.

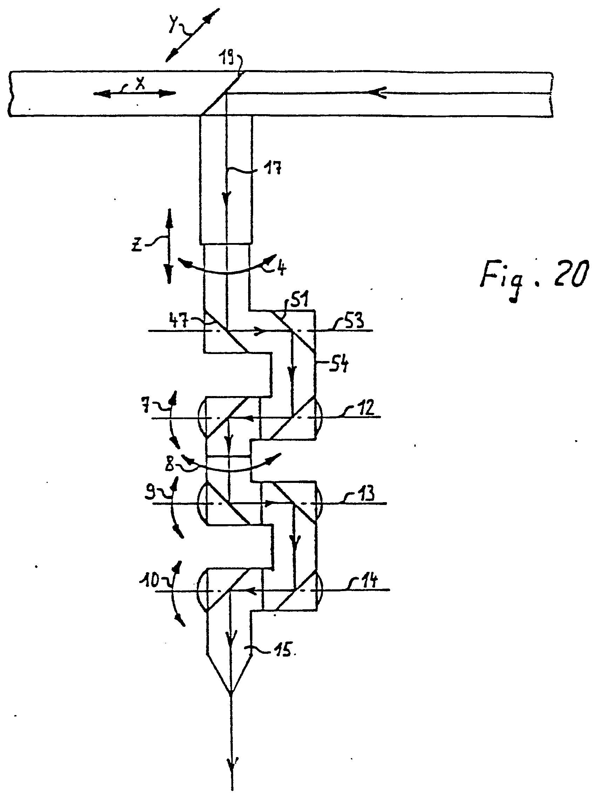

Zur Erläuterung der sechsten Ausführungsform der Führungsvorrichtung wird nunmehr zunächst auf die Fig. 20 bis 22 Bezug genommen. Bei dieser Ausführungsform ist am unteren Ende der Teleskopeinrichtung eine horizontale, feste und parallel zur Laserkopfschwenkachse 12 angeordnete Laserstrahlumlenkachse 53 angeschlossen, durch welche der Laserstrahl 17 zur Laserkopfschwenkachse 12 umgelenkt ist. Der Laserkopfschwenkachse 12 folgem noch die bereits mehrfach beschriebenen Laserstrahlumlenkachsen 13 und 14, die ebenfalls horizontal und parallel zur Laserkopfschwenkachse angeordnet sind. Diese Laserstrahlumlenkachsen 13 oder 14 sind wiederum entweder als Schwenkachsen 9, 10 ausgebildet, oder eine von ihnen ist als unbewegliche Achse und die andere als längenveränderbare Bewegungsachse 57 ausgebildet, wie das in Fig. 24 dargestellt ist, in welcher die längenverän-derbare Bewegungsachse mit der Laserstrahlumlen-kachse 14 zusammenfällt. Aber auch die umgekehrte Anordnung, bei der die Laserstrahlumlen-kachse 13 die längenveränderbare Bewegungs-achse 57 ist, während die Laserstrahlumlenkachse 14 die unbewegliche Achse ist, ist möglich. Zwischen den beiden Achsen 12 und 13 ist wiederum die um 360° gesteuerte zweite Drehachse 8 vorgesehen. Die Laserstrahlumlenkwege an den Achsen 53, 12, 13 und 14 sind wiederum gleich groß, wie Fig. 20 verdeutlicht, so daß sich die Mittelachsen der Teleskopeinrichtung 3 und des Laserkopfes 15 stets in einer gemeinsamen senkrechten Ebene befinden, wenn die beiden zusätzlichen Laserstrahlumlenkachsen 13, 14 nicht zum Schneiden von kreisbogenförmigen Durchbrüchen eingestellt sind. Diese Bedingung liegt dann vor, wenn die beiden Schwenkachsen 9, 10 nicht verschwenkt sind, bzw. wenn die Bewegungsachse 57 bei der Ausführungsvariante nach Fig. 24 nicht längenverändert ist. In diesen Stellungen haben Drehungen um die Drehachse 8 keinen Einfluß auf die Lage der Mittelachse des Laserkopfes 15.

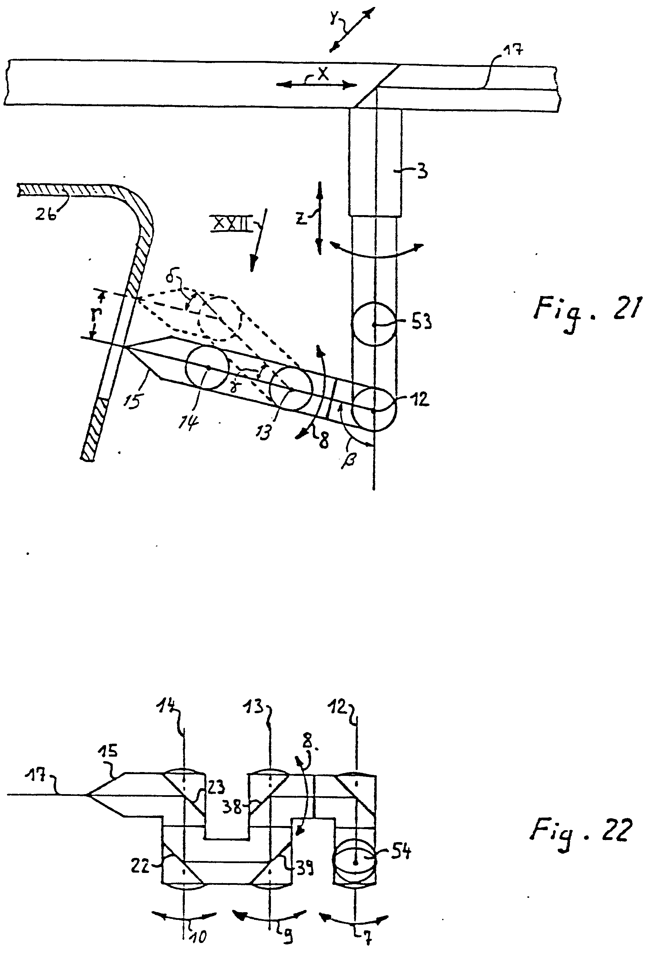

Auch mit der so aufgebauten Vorrichtung können ohne weiteres auf die bereits beschriebene Weise Durchbrüche mit wenigstens teilweisem kreisbogenförmigem Verlauf der Schnittkante in allen Werkstückbereichen auf einfache Weise angebracht werden. Hierfür wird zunächst die Drehachse 8 senkrecht zur Werkstückoberfläche und fluchtend mit dem Mittelpunkt des zu schneidenden Kreisbogens eingestellt. Danach wird der Laserkopf 15, wie in den Fig. 21 und 24 gestrichelt angedeutet ist, auf den gewünschten Schnitthalb-messer r eingestellt, bevor die Drehachse 8 drehend angetrieben wird.

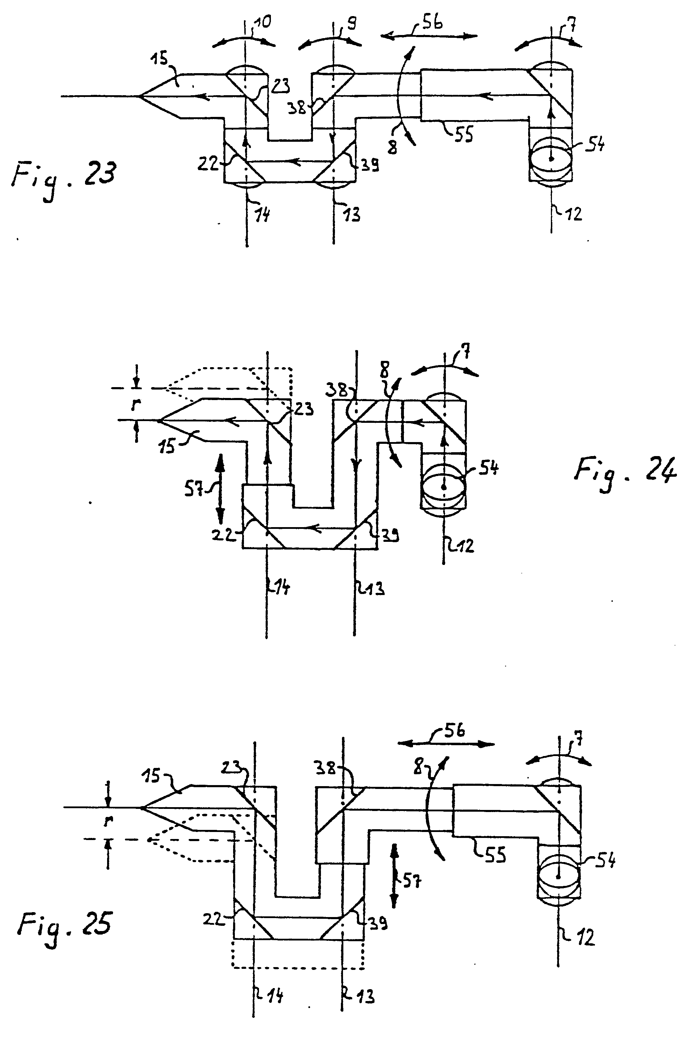

Den beiden in den Fig. 23 und 25 gezeigten Modifikationen der Vorrichtung ist gemeinsam, daß die zwischen der Laserkopfschwenkachse 12 und der benachbarten Laserstrahlumlenkachse 13 vorgesehene Drehachse 8 zugleich als Teleskopeinrichtung 55 und damit zugleich als längenveränderbare Bewegungsachse 56 ausgebildet ist. Dadurch wird eine zusätzliche Verstellmöglichkeit für den Laserkopf 15 erreicht. Bei der Modifikation gemäß Fig. 23 sind die beiden Laserstrahlumlenkachsen 13 und 14 als Schwenkachsen 9 und 10 ausgebildet. Bei der Ausführung nach Fig. 25 dagegen ist die eine Laserstrahlumlenkachse, im gezeigten Beispiel die Achse 14, unbeweglich, während die andere Laserstrahlumlenkachse, im gezeigten Beispiel 13, als längenveränderbare Bewegungsachse 57 vorgesehen ist.

Wie Fig. 20 veranschaulicht, sind die Abstände zwischen den Achsen 53, 12, 13 und 14 gleich groß. Je nach Anwendungsbereich der Führungsvorrichtung kann es aber von Vorteil sein, wenn der Abstand zwischen den Achsen 53 und 12 größer als die übrigen Abstände ausgeführt ist. Zu diesem Zweck ist das zwischen den Achsen 12 und 53 vorgesehene Leitrohr 54 entsprechend zu verlängern. Fig. 21 macht deutlich, daß mit Hilfe dieser Führungsvorrichtung auch ohne weitere Werkstückbereiche erreichbar sind, die von oben gesehen hinterschnitten ausgeführt sind.

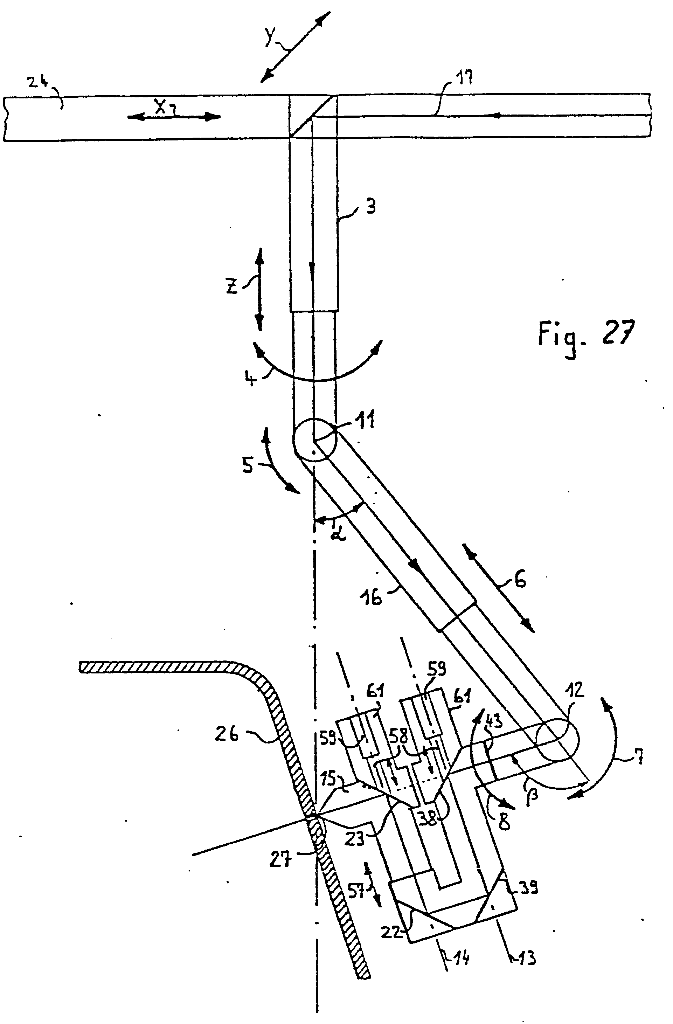

Bei allen beschriebenen Ausführungsformen der Führungsvorrichtung ist auf den Laserstrahlumlenkachsen, gleichgültig ob es sich um feste oder bewegliche Achsen handelt, jeweils ein Um-lenkspiegelpaar vorgesehen, wodurch der Laser-strahl vielfach umgelenkt wird. Dies ist die Vor-aussetzung für die außerordentliche Anpassungs-fähigkeit der erfindungsgemäßen Vorrichtung an alle bei zwei- und dreidimensionalen Werkstücken auftretenden Bearbeitungssituationen. Für bestimmte Bearbeitungssituationen ist die Vielzahl der vorhandenen Umlenkungen nicht erforderlich. Von dieser Überlegung ausgehend werden die in den Fig. 26 und 27 in Ausführungsbeispielen gezeichneten Konstruktionen vorgeschlagen. Hierbei ist vorgesehen, daß bei den auf die zweite Drehachse 8 folgenden (Fig. 27) oder bei den auf beide Drehachsen 4, 8 jeweils folgenden (Fig. 26) zwei benachbarten parallelen Laserstrahlumlenkachsen 13, 14 bzw. 11, 12 ; 13, 14 die beiden auf der betreffenden Drehachse bzw. auf deren gedachter Verlängerung befindlichen Spiegel 38, 23 bzw. 20, 37 ; 38, 23 zur Freigabe eines geraden mit der Mittelachse des Laserkopfes 15 und der Drehachse 8 bzw. den Drehachsen 4, 8 fluchtenden Durchgangs für den Laserstrahl 17 gemeinsam parallelverschiebbar angeordnet sind. Auf diese ebenso einfache wie wirkungsvolle Weise kann durch einfaches paarweises Verschieben der sich gegenüberliegenden Spiegel, soweit deren Rückflächen paarweise einen Winkel von 90° einschließen, die Laserstrahlumlenkung an jeweils zwei Achsen aufgehoben und der Laserstrahl zum direkten Übertritt von der einen Achse auf die andere Achse veranlaßt werden. Hierbei ist selbstverständlich durch entsprechende Programmsteuerung eine Fluchtungslage zwischen den beteiligten Bauteilen automatisch herbeizuführen, damit der Laserstrahl vor Erreichen des Laserkopfes 15 nicht aus der Führungsvorrichtung austreten kann.

Wie aus den Fig. 26 und 27 hervorgeht, können die verschiebbaren Spiegel 20, 37 ; 38, 23 für den pneumatischen, hydraulischen oder elektromotorischen Antrieb ausgebildet sein und sind zu diesem Zweck mit Führungsstangen 58 od. dgl. starr verbunden, die ihrerseits in Führungsbuchsen 59 od. dgl.. eingreifen, die in Gehäuseverlängerungen 61 der zu den Laserstrahlumlenkachsen gehörenden Gehäuse befestigt sind. Die Ausführung der Spiegelantriebselemente erfordert eine der notwendigen Laserstrahljustierung angemessene hohe Präzision.

Bei dem Ausführungsbeispiel nach Fig. 26 sind an allen vier Laserstrahlumlenkachsen 11 bis 14 verschiebbare Spiegel vorgesehen, wodurch der Laserstrahl aus der Teleskopeinrichtung 3 unmittelbar durch das Gehäuse der Drehachse 8 hindurch zum Laserkopf 15 ohne jede Strahlumlenkung fallen kann, wenn sämtliche vier Schiebespiegel verschoben sind. Da die Spiegel paarweise verschiebbar sind, nämlich 20, 37 einerseits und 38, 23 andererseits, können diese beiden Spiegelpaare unabhängig voneinander verschoben bzw. in ihrer Umlenklage belassen werden.

Während beim Ausführungsbeispiel nach Fig. 26 das Schiebespiegelpaar 38, 23 auf den als Schwenkachsen 9, 10 ausgebildeten Laserstrahlumlenkachsen 13, 14 angeordnet ist, sind beim Ausführungsbeispiel gemäß Fig. 27 die Spiegel 38, 23 auf Laserstrahlumlenkachsen 13, 14 vorgesehen, von denen eine als unbewegliche Achse und die andere als längenveränderbare Bewegungsachse 57 ausgebildet ist, wie das bereits mehrfach unter Bezugnahme auf die Fig. 14, 19, 24 und 25 beschrieben wurde. Die Spiegel 38, 23 dürfen hierbei selbstverständlich nur dann verschoben werden, wofür die Programmsteuerung sorgt, wenn die Bewegungsachse 57 nicht längenverändert ist, d. h. wenn sich die Drehachse 8 und die Mittelachse des Laserkopfes 15 in Fluchtungslage befinden.

Damit bei verschobenen Spiegelpaaren der Laserstrahl aus den Gehäusen austreten kann, sind in den Gehäusen der Laserstrahlumlenkachsen Öffnungen 60 vorgesehen. Zwischen jeweils gegenüberliegenden Öffnungen 60 befinden sich rohrförmige Laserstrahlabdeckungen 66. Die Laserstrahlabdeckungen 66 zwischen den Achsen 11 und 12 (Fig. 26) greifen teleskopähnlich ineinander und sind jeweils mit dem zugeordneten Teleskopelement der Teleskopeinrichtung 16 über Brücken 67 starr verbunden.

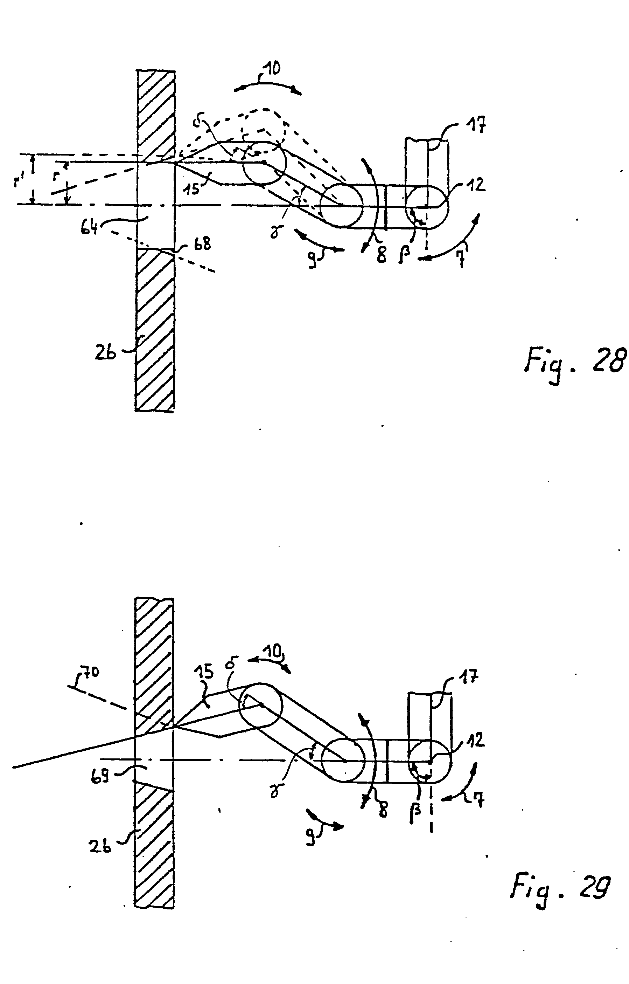

Soweit die Führungsvorrichtung für das Schneiden von Durchbrüchen mit wenigstens teilweisem kreisbogenförmigem Verlauf der Schnittkante vorgesehen ist, wurde bei allen Ausführungsformen der Erfindung die Einstellung der Vorrichtung für die Erzeugung von solchen Schnittkanten beschrieben, die senkrecht zu der Werkstückoberfläche verlaufen, in welche die Durchbrüche angebracht werden sollen. Die Führungsvorrichtung ist jedoch bei allen ihren Ausführungsformen auch so einstellbar, daß konisch verlaufende Schnittkanten erzielbar sind. Zur Erläuterung der entsprechenden Vorrichtungseinstellung wird nachfolgend auf die Fig. 28 und 29 Bezug genommen. In Fig. 28 ist dargestellt, wie bei einem zuvor in das Werkstück 26 geschnittenen kreisförmigen Durchbruch 64 mit parallel zur Drehachse 8 verlaufender Schnittkante anschließend die äußere Lochkante mit einer Abfasung 68 versehen wird. Zu diesem Zweck ist der Schwenkwinkel β an der Laserkopfschwenkachse 12 so eingestellt, daß die zweite Drehachse 8 senkrecht zur Werkstückoberfläche ausgerichtet ist und mit dem Mittelpunkt des kreisförmigen Durchbruchs 64 fluchtet.

Die Schwenkwinkel γ und δ an den beiden Schwenkachsen 9, 10 sind, wie die gestrichelte Darstellung verdeutlicht, nach Maßgabe des gewünschten Schnitthalbmessers r'so eingestellt, daß die zweite Drehachse 8 und die Mittelachse des Laserkopfes 15 einen dem Konuswinkel entsprechenden Winkel einschließen. Da der Schnitthalbmesser r'größer ist als der Schnitthalbmesser r des vorher geschnittenen Durchbruchs, entsteht bei Drehantrieb des Laserkopfes 15 um die Drehachse 8 die Abfasung 68.

Soll dagegen ein durch die Wandungsdicke des Werkstücks 26 durchgehend konischer Durchbruch 69 geschnitten werden, so erfolgt die Einstellung der Vorrichtung von vornherein so, wie es mit Bezug auf die Anbringung der Abfasung 68 gemäß Fig. 28 beschrieben wurde. Die Einstellung der Vorrichtung ist aus Fig. 29 entnehmbar. Für die mit Bezug auf die Fig. 28 und 29 beschriebenen Arbeitsgange ist es von Vorteil, wenn die Drehachse 8 zugleich als Teleskopeinrichtung und damit zugleich als längenveränderbare Bewegungsachse ausgebildet ist, wie das mit Bezug auf die Fig. 23 und 25 beschrieben worden ist. Auf diese Weise kann der bei konischer Einstellung des Laserkopfes 15 eintretende Verringerung des Abstandes zwischen der Schwenkachse 12 und der Oberfläche des Werkstücks 26 ohne Bewegung an der X- oder Y-Bewegungsachse Rechnung getragen werden. Hierbei erlaubt die gleichzeitig als Teleskopeinrichtung ausgebildete Drehachse den erforderlichen Abstandsausgleich.

Die Einstellung der Vorrichtung kann für die in den Fig. 28 und 29 illustrierten Schnittaufgaben selbstverständlich auch so erfolgen, daß bei Fig. 28 die konische Abfasung an der im Werkstück 26 innen liegenden Ringkante erfolgt bzw. daß bei Fig. 29 der konische Durchbruch sich von außen nach innen erweitert, wie das durch die gestrichelte Linie 70 angedeutet ist.

Alle Ausführungsformen der erfindungsgemäßen Führungsvorrichtung werden durch rechnerprogrammierte Steuerung betätigt, sie können jedoch auch vollständig oder in Teilbereichen der verschiedenen Bewegungen im Teach-in-Verfahren einprogrammiert werden, oder auch durch selbständig einprogrammierbare und wiederholbare Nachführsteuerung.

## Patentansprüche

1. Führungsvorrichtung für einen mehrfach an 45°-spiegeln umgelenkten Laserstrahl zur dreidimensionalen Werkstückbearbeitung, mit fünf gesteuerten Bewegungsachsen, von denen die erste und zweite Bewegungsachse die horizontalen Koordinatenachsen X und Y sind, die dritte und vierte Bewegungsachse koaxial in einer drehbaren und längenveränderbaren vertikalen Teleskopeinrichtung od. dgl. verwirklicht sind und die fünfte Bewegungsachse eine horizontale Schwenkachse ist, um welche der Laserkopf schwenkbar ist, wobei ab der dritten Bewegungsachse eine selbsttragende Ausbildung vorgesehen ist, dadurch gekennzeichnet, daß eine weitere als horizontale Schwenkachse (11) ausgebildete Bewegungsachse (5) parallel zu der Laserkopfschwenkachse (14) vorgesehen ist, deren Abstand zur Laserkopfschwenkachse größer ist als die Länge des Laserkopfes (15), wobei die Laserstrahlumlenkung an der zusätzlichen Schwenkachse (11) so vorgesehen ist, daß sich die Mittelachsen der Teleskopeinrichtung (3) und des Laserkopfes (15) stets in einer gemeinsamen senkrechten Ebene befinden, und daß die Schwenkwinkel (α, β) an der zusätzlichen Schwenkachse (11) und der Laserkopfschwenkachse (14) nach Maßgabe der Lage der zu bearbeitenden Werkstückoberfläche aufeinander abgestimmt programmier- und einstellbar sind.

2. Führungsvorrichtung nach Anspruch 1, dadurch gekennzeichnet, daß die Schwenkwinkel α, β an den horizontalen Schwenkachsen (11, 14) so aufeinander abgestimmt programmiert sind, daß sich der Auftreffpunkt (27) des Laserstrahls (17) auf der Werkstückoberfläche auf der gedachten Verlängerung der Mittelachse der Teleskopeinrichtung (3) befindet.

3. Führungsvorrichtung nach Anspruch 1, dadurch gekennzeichnet, daß die Schwenkwinkel (α, β) für das Schneiden von Durchbrüchen mit wenigstens teilweisem kreisbogenförmigem Verlauf der Schnittkante (30, 31) in horizontalen Werkstückbereichen an der Laserkopfschwenkachse (14) und der benachbarten horizontalen Schwenkachse (11) gleich groß eingestellt sind, und daß zur Erzeugung des kreisbogenförmigen Schnittes die Teleskopeinrichtung (3) um ihre Drehachse (4) drehend angetrieben ist.

4. Führungsvorrichtung nach einem der Ansprüche 1 bis 3, dadurch gekennzeichnet, daß der Laserstrahl (17) zwischen den beiden Schwenkachsen (11, 14) unter Bildung einer weiteren Bewegungsachse (6) durch eine längenveränderbar gesteuerte weitere Teleskopeinrichtung (16) geführt ist.

5. Führungsvorrichtung für einen mehrfach an 45°-Spiegeln umgelenkten Laserstrahl zur dreidimensionalen Werkstückbearbeitung, mit fünf gesteuerten Bewegungsachsen, von denen die erste und zweite Bewegungsachse die horizontalen Koordinatenachsen X und Y sind, die dritte und vierte Bewegungsachse koaxial in einer drehbaren und längenveränderbaren vertikalen Teleskopeinrichtung od. dgl. verwirklicht sind und die fünfte Bewegungsachse eine horizontale Schwenkachse ist, um welche der Laserkopf schwenkbar ist, wobei ab der dritten Bewegungsachse eine selbsttragende Ausbildung vorgesehen ist, dadurch gekennzeichnet, daß parallel zur Laserkopfschwenkachse (14) drei weitere als horizontale Schwenkachsen (11, 12, 13) ausgebildete Bewegungsachsen (5, 7, 9) vorgesehen sind, bei denen der Abstand zwischen der ersten und der zweiten der der Teleskopeinrichtung (3) nachgeschalteten Schwenkachsen (11, 12) größer ist als die um die Länge des Laserkopfes (15) vermehrte Summe der Abstände zwischen der zweiten und der dritten Schwenkachse (12, 13) und zwischen der dritten Schwenkachse (13) und der Laserkopfschwenkachse (14), wobei die Laserstrahlumlenkung an allen Schwenkachsen (11 bis 14) so vorgesehen ist, daß die Mittelachsen der Teleskopeinrichtung (3) und des Laserkopfes (15) miteinander fluchten, wenn an allen Schwenkachsen der Schwenkwinkel den Wert Null hat, und daß zwischen der zweiten und dritten Schwenkachse (12, 13) eine um 360° gesteuerte zweite Drehachse (8) vorgesehen ist.

6. Führungsvorrichtung nach Anspruch 5, dadurch gekennzeichnet, daß die Schwenkwinkel (α, β) an der ersten und zweiten horizontalen Schwenkachse (11, 12) bei einem Wert der Schwenkwinkel an der dritten Schwenkachse (13) und der Laserkopfschwenkachse (14) von Null so aufeinander abgestimmt programmiert und eingestellt sind, daß der Auftreffpunkt (27) des Laserstrahls (17) auf der Werkstückoberfläche auf der gedachten Verlängerung der Mittelachse der Teleskopeinrichtung (3) befindet.

7. Führungsvorrichtung nach Anspruch 5, dadurch gekennzeichnet, daß für das Schneiden von Durchbrüchen mit wenigstens teilweisem kreisbogenförmigem Verlauf der Schnittkante in nichthorizontalen Werkstückbereichen die Schwenkwinkel (α, β) an der ersten und zweiten Schwenkachse (11, 12) so eingestellt sind, daß die zweite Drehachse (8) senkrecht zur Werkstückoberfläche ausgerichtet ist, während die Schwenkwinkel (γ, δ) an der dritten Schwenkachse (13) und der Laserkopfschwenkachse (14) nach Maßgabe des Schnitthalbmessers (r) so eingestellt sind daß die zweite Drehachse (8) und die Mittelachse des Laserkopfes (15) parallel verlaufen, und daß der Laserkopf (15) um die zweite Drehachse (8) drehend angetrieben ist.

8. Führungsvorrichtung nach einem der Ansprüche 5 bis 7, dadurch gekennzeichnet daß zwischen der ersten Schwenkachse (11) und der zweiten Schwenkachse (12) der Laserstrahl (17) zwischen diesen beiden Schwenkachsen unter Bildung einer weiteren Bewegungsachse (6) durch eine längenveränderbar gesteuerte weitere Teleskopeinrichtung (16) geführt ist.

9. Führungsvorrichtung für einen mehrfach an 45°-Spiegeln umgelenkten Laserstrahl zur dreidimensionalen Werkstückbearbeitung, mit fünf gesteuerten Bewegungsachsen, von denen die erste und zweite Bewegungsachse die horizontalen Koordinatenachsen X und Y sind, die dritte und vierte Bewegungsachse koaxial in einer drehbaren und längenveränderbaren vertikalen Teleskopeinrichtung od. dgl. verwirklicht sind und die fünfte Bewegungsachse eine horizontale Schwenkachse für den Laserkopf ist, wobei ab der dritten Bewegungsachse eine selbsttragende Ausbildung vorgesehen ist, dadurch gekennzeichnet, daß eine weitere als horizontale Schwenkachse (11) ausgebildete Bewegungsachse (5) parallel zu der Schwenkachse (12) für den Laserkopf (15) vorgesehen ist, daß zwischen der Schwenkachse (12) für den Laserkopf (15) und dem Laserkopf zwei zusätzliche horizontale und zu den beiden Schwenkachsen (11, 12) parallele Laserstrahlumlenkachsen (13', 14') vorgesehen sind, von denen die eine als unbewegliche Achse und die andere als Teleskopachse (9) ausgebildet ist, daß zwischen der Schwenkachse (12) für den Laserkopf (15) und der benachbarten Laserstrahlumlenkachse (13') eine um 360° gesteuerte zweite Drehachse (8) vorgesehen ist, daß der Abstand zwischen den beiden Schwenkachsen (11, 12) größer ist als die um die Länge des Laserkopfes (15) vermehrte Summe der Abstände zwischen der Schwenkachse (12) für den Laserkopf und der dem Laserkopf benachbarten Laserstrahlumlenkachse (14'), und daß die Laserstrahlumlenkung an den Schwenkachsen (11, 12) und den beiden zusätzlichen Laserstrahlumlenkachsen (13', 14') so vorgesehen ist, daß die Mittelachsen der Teleskopeinrichtung (3) und des Laserkopfes (15) miteinander fluchten, wenn an den beiden Schwenkachsen der Schwenkwinkel den Wert Null hat und die Teleskopachse nicht längenverändert ist.

10. Führungsvorrichtung nach Anspruch 9, dadurch gekennzeichnet daß die Schwenkwinkel (α, β) sn den beiden horizontalen Schwenkachsen (11, 12) so aufeinander abgestimmt programmiert sind, daß sich der Auftreffpunkt (27) des Laserstrahls (17) auf der Werkstückoberfläche auf der gedachten Verlängerung der Mittelachse der Teleskopeinrichtung (3) befindet, wenn die Teleskopachse (13' oder 14') nicht längenverändert ist.

11. Führungsvorrichtung nach Anspruch 9, dadurch gekennzeichnet, daß für das Schneiden von Durchbrüchen mit wenigstens teilweisem kreisbogenförmigem Verlauf der Schnittkante in nichthorizontalen Werkstückbereichen die Schwenkwinkel (α, β) an den beiden Schwenkachsen (11, 12) so eingestellt sind, daß die zweite Drehachse (8) senkrecht zur Werkstückoberfläche ausgerichtet ist, während die Teleskopachse (13' oder 14') nach Maßgabe des Schnitthalbmessers (r) längenverändert eingestellt ist, und daß der Laserkopf (15) um die zweite Drehachse (8) drehend angetrieben ist.

12. Führungsvorrichtung nach einem der Ansprüche 9 bis 11, dadurch gekennzeichnet daß zwischen den beiden Schwenkachsen (11, 12) der Laserstrahl (17) unter Bildung einer weiteren Bewegungsachse (6) durch eine längenveränderbar gesteuerte weitere Teleskopeinrichtung (16) geführt ist.

13. Führungsvorrichtung für einen mehrfach an 45°-Spiegeln umgelenkten Laserstrahl zur dreidimensionalen Werkstückbearbeitung, mit mehreren gesteuerten Bewegungsachsen, von denen die erste und zweite Bewegungsachse die horizontalen Koordinatenachsen X und Y sind, die dritte und vierte Bewegungsachse koaxial in einer drehbaren und längenveränderbaren vertikalen Teleskopeinrichtung od. dgl. verwirklicht sind und die fünfte Bewegungsachse eine horizontale Schwenkachse ist, um welche der Laserkopf schwenkbar ist, wobei ab der dritten Bewegungsachse eine selbsttragende Ausbildung vorgesehen ist, dadurch gekennzeichnet, daß am unteren Ende der Teleskopeinrichtung (3) ein horizontales Leitrohr (46) angebracht ist, in welches der Laserstrahl an einem 45°-Spiegel (47) umgelenkt ist, daß eine weitere als horizontale Schwenkachse (11) ausgebildete Bewegungsachse (5) parallel zur Laserkopfschwenkachse (12) am freien Ende des Leitrohres (46) vorgesehen ist, daß zwischen der Laserkopfschwenkachse (12) und dem Laserkopf (15) zwei zusätzliche horizontale und zu den beiden Schwenkachsen (11, 12) parallele Laserstrahlumlenkachsen (13, 14) vorgesehen sind, die entweder beide als horizontale Schwenkachsen (9, 10) ausgebildet sind, oder von denen eine als unbewegliche Achse und die andere als längenveränderbare Bewegungsachse (57) ausgebildet ist, daß zwischen der Laserkopfschwenkachse (12) und der benachbarten Laserstrahlumlenkachse (13) eine um 360° gesteuerte zweite Drehachse (8) vorgesehen ist, und daß die Laserstrahlumlenkung an den Schwenkachsen (11, 12) und den beiden zusätzlichen Laserstrahlumlenkachsen (13, 14) so vorgesehen ist, daß sich die Mittelachsen der Teleskopeinrichtung (3) und des Laserkopfes (15) stets in einer gemeinsamen senkrechten Ebene befinden, wenn die beiden zusätzlichen Laserstrahlumlenkachsen (13, 14) nicht zum Schneiden von kreisbogenförmigen Durchbrüchen eingestellt sind (Fig. 1 bis 4).

14. Führungsvorrichtung nach Anspruch 13 dadurch gekennzeichnet, daß die Winkeleinstellungen an den beiden horizontalen Schwenkachsen (11, 12) so aufeinander abgestimmt programmierbar sind, daß sich der Auftreffpunkt (27) des Laserstrahls (17) auf der Werkstückoberfläche auf der gedachten Verlängerung der Mittelachse der Teleskopeinrichtung (3) befindet, wenn keine Winkeleinstellungen an den beiden zusätzlichen Schwenkachsen (13, 14) erfolgt sind, bzw. wenn die längenveränderbare Laserstrahlumlenkachse nicht längenverändert ist.

15. Führungsvorrichtung nach den Ansprüchen 13 oder 14 dadurch gekennzeichnet, daß der Abstand zwischen der Mittelachse der Teleskopeinrichtung (3) und der weiteren horizontalen Schwenkachse (11) dem Abstand zwischen der Laserkopfschwenkachse (12) und dem Auftreffpunkt (27) des Laserstrahls auf der Werkstückoberfläche entspricht.

16. Führungsvorrichtung nach Anspruch 13 dadurch gekennzeichnet, daß für das Schneiden von Durchbrüchen mit wenigstens teilweisem kreisbogenförmigem Verlauf der Schnittkante in allen Werkstückbereichen die Schwenkwinkel (α, β) an den beiden Schwenkachsen (11, 12) so eingestellt sind, daß die zweite Drehachse (8) senkrecht zur Werkstückoberfläche ausgerichtet ist, während die Schwenkwinkel (γ, δ) an den beiden zusätzlichen Schwenkachsen (9, 10) nach Maßgabe des Schnitthalbmessers (r) so eingestellt sind, daß die zweite Drehachse (8) und die Mittelachse des Laserkopfes (15) parallel verlaufen, bzw. während die längenveränderbare Laserstrahlumlenkachse (57) nach Maßgabe des Schnitthalbmessers (r) längenverändert eingestellt ist, und daß der Laserkopf (15) um die zweite Drehachse (8) drehend angetrieben ist.

17. Führungsvorrichtung nach Anspruch 16 dadurch gekennzeichnet, daß die Schwenkwinkel (α, β) an den beiden Schwenkachsen (11, 12) so eingestellt sind, daß sich der Kreisbogenmittelpunkt der Schnittkante auf der gedachten Verlängerung der Mittelachse der ersten Teleskopeinrichtung (3) befindet.

18. Führungsvorrichtung nach einem der Ansprüche 13 bis 17 dadurch gekennzeichnet, daß zwischen den beiden Schwenkachsen (11, 12) der Laserstrahl (17) unter Bildung einer weiteren Bewegungsachse (6) durch eine längenveränderbar gesteuerte weitere Teleskopeinrichtung (16) geführt ist.

19. Führungsvorrichtung für einen mehrfach an 45°-Spiegeln umgelenkten Laserstrahl zur dreidimensionalen Werkstückbearbeitung, mit mehreren gesteuerten Bewegungsachsen, von denen die erste und zweite Bewegungsachse die horizontalen Koordinatenachsen X und Y sind, die dritte und vierte Bewegungsachse koaxial in einer drehbaren und längenveränderbaren vertikalen Teleskopeinrichtung od. dgl. verwirklicht sind und die fünfte Bewegungsachse eine horizontale Schwenkachse ist, um welche der Laserkopf schwenkbar ist, wobei ab der dritten Bewegungsachse eine selbsttragende Ausbildung vorgesehen ist, dadurch gekennzeichnet, daß an das untere Ende der Teleskopeinrichtung (3) unter Bildung einer weiteren horizontalen Bewegungsachse (48) eine zweite längenveränderbar gesteuerte Teleskopeinrichtung (49) angeschlossen ist, in welche der Laserstrahl (17) an einem 45°-Spiegel (47) umgelenkt ist und an welche unter Bildung einer weiteren vertikalen Bewegungsachse (50) eine dritte längenveränderbar gesteuerte Teleskopeinrichtung (16) angeschlossen ist, in welche der Laserstrahl (17) an einem 45°-Spiegel (51) umgelenkt ist, daß am unteren Ende der dritten Teleskopeinrichtung (16) eine zur Laserkopfschwenkachse (12) parallele feste Laserstrahlumlenkachse (52) vorgesehen ist, von welcher der Laserstrahl zur Laserkopfschwenkachse (12) umgelenkt ist, daß zwischen der Laserkopfschwenkachse (12) und dem Laserkopf (15) zwei zusätzliche horizontale und zur Laserkopfschwenkachse parallele Laserstrahlumlenkachsen (13, 14) vorgesehen sind, die entweder beide als horizontale Schwenkachsen (9, 10) ausgebildet sind, oder von denen eine als unbewegliche Achse und die andere als längenveränderbare Bewegungsachse (57) ausgebildet ist, daß zwischen der Laserkopfschwenkachse (12) und der benachbarten Laserstrahlumlenkachse (13) eine um 360° gesteuerte zweite Drehachse (8) vorgesehen ist, und daß die Laserstrahlumlenkung an der Laserkopfschwenkachse (12) und den drei Laserstrahlumlenkachsen (52, 13, 14) so vorgesehen ist, daß sich die Mittelachsen der Teleskopeinrichtung (3) und des Laserkopfes (15) stets in einer gemeinsamen senkrechten Ebene befinden, wenn die beiden zusätzlichen Laserstrahlumlenkachsen (13, 14) nicht zum Schneiden von kreisbogenförmigen Durchbrüchen eingestellt sind.

20. Führungsvorrichtung nach Anspruch 19, dadurch gekennzeichnet, daß die zweite Teleskopeinrichtung (49) auf eine dem Abstand zwischen der Laserstrahlumlenkachse (52) am unteren Ende der dritten Teleskopeinrichtung (16) und der Laserkopfschwenkachse (12) entsprechende Länge einstellbar ist, derart, daß die Mittelachsen der ersten Teleskopeinrichtung (3) und des Laserkopfes (15) fluchtend sind, wenn keine Winkeleinstellungen an den beiden zusätzlichen Schwenkachsen (9, 10) erfolgt sind, bzw. wenn die längenveränderbare Laserstrahlumlenkachse (57) nicht längenverändert ist.

21. Führungsvorrichtung nach den Ansprüchen 19 oder 20, dadurch gekennzeichnet, daß die zweite Teleskopeinrichtung (49) auf eine Länge einstellbar ist, die dem horizontalen Abstand zwischen der Laserstrahlumlenkachse (52) am unteren Ende der dritten Teleskopeinrichtung (16) und dem Auftreffpunkt (27) des Laserstrahls auf der Werkstückoberfläche entspricht.

22. Führungsvorrichtung nach Anspruch 19, dadurch gekennzeichnet, daß für das Schneiden von Durchbrüchen mit wenigstens teilweisem kreisbogenförmigem Verlauf der Schnittkante in allen Werkstückbereichen der Schwenkwinkel (β) an der Laserkopfschwenkachse (12) so eingestellt ist, daß die zweite Drehachse (8) senkrecht zur Werkstückoberfläche ausgerichtet ist, während die Schwenkwinkel (γ, δ) an den beiden zusätzlichen Schwenkachsen (9, 10) nach Maßgabe des Schnitthalbmessers (r) so eingestellt sind daß die zweite Drehachse (8) und die Mittelachse des Laserkopfes (15) parallel verlaufen, bzw. während die längenveränderbare Laserstrahlumlenkachse (57) nach Maßgabe des Schnitthalbmessers (r) längenverändert eingestellt ist, und daß der Laserkopf (15) um die zweite Drehachse (8) drehend angetrieben ist.

23. Führungsvorrichtung nach den Ansprüchen 19 und 22, dadurch gekennzeichnet, daß die zweite Teleskopeinrichtung (49) zum Schneiden von Durchbrüchen in horizontalen Werkstückbereichen so eingestellt ist, daß sich der Kreismittelpunkt der Schnittkante auf der gedachten Verlängerung der Mittelachse der ersten Teleskopeinrichtung (3) befindet.

24. Führungsvorrichtung nach einem der Ansprüche 19 bis 21 dadurch gekennzeichnet daß anstelle der dritten vertikalen Teleskopeinrichtung (16) eine abstandsunveränderliche Umlenkung zwischen dem 45°-Spiegel (51) der zweiten Teleskopeinrichtung (49) und der festen Laserstrahlumlenkachse (52) vorgesehen ist.

25. Führungsvorrichtung für einen mehrfach an 45°-Spiegeln umgelenkten Laserstrahl zur dreidimensionalen Werkstückbearbeitung, mit mehreren gesteuerten Bewegungsachsen, von denen die erste und zweite Bewegungsachse die horizontalen Koordinatenachsen X und Y sind, die dritte und vierte Bewegungsachse koaxial in einer drehbaren und längenveränderbaren vertikalen Teleskopeinrichtung od. dgl. verwirklicht sind und die fünfte Bewegungsachse eine horizontale Schwenkachse ist, um welche der Laserkopf schwenkbar ist, wobei ab der dritten Bewegungsachse eine selbsttragende Ausbildung vorgesehen ist, dadurch gekennzeichnet daß an das untere Ende der Teleskopeinrichtung (3) eine horizontale, feste und parallel zur Laserkopfschwenkachse (12) angeordnete Laserstrahlumlenkachse (53) angeschlossen ist, durch welche der Laserstrahl (17) zur Laserkopfschwenkachse (12) umgelenkt ist, daß zwischen der Laserkopfschwenkachse (12) und dem Laserkopf (15) zwei zusätzliche horizontale und zur Laserkopfschwenkachse (12) parallele Laserstrahlumlenkachsen (13, 14) vorgesehen sind, die entweder beide als horizontale Schwenkachsen (9, 10) ausgebildet sind, oder von denen eine als unbewegliche Achse und die andere als längenveränderbare Bewegungsachse (57) ausgebildet ist, daß zwischen der Laserkopfschwenkachse (12) und der benachbarten Laserstrahlumlenkachse (13) eine um 360° gesteuerte zweite Drehachse (8) vorgesehen ist, und daß die Laserstrahlumlenkung an der festen Laserstrahlumlenkachse (53), der Laserkopfschwenkachse (12) und den beiden zusätzlichen Laserstrahlumlenkachsen (13, 14) so vorgesehen ist, daß sich die Mittelachsen der Teleskopeinrichtung (3) und des Laserkopfes (15) stets in einer gemeinsamen senkrechten Ebene befinden, wenn die beiden zusätzlichen Laserstrahlumlenkachsen (13, 14) nicht zum Schneiden von kreisbogenförmigen Durchbrüchen eingestellt sind.

26. Führungsvorrichtung nach Anspruch 25, dadurch gekennzeichnet, daß für das Schneiden von Durchbrüchen mit wenigstens teilweisem kreisbogenförmigem Verlauf der Schnittkante in allen Werkstückbereichen der Schwenkwinkel (β) an der Laserkopfschwenkachse (12) so eingestellt ist, daß die zweite Drehachse (8) senkrecht zur Werkstückoberfläche ausgerichtet ist, während die Schwenkwinkel (γ, δ) an den beiden zusätzlichen Schwenkachsen (9, 10) nach Maßgabe des Schnitthalbmessers (r) so eingestellt sind, daß die zweite Drehachse (8) und die Mittelachse des Laserkopfes (15) parallel verlaufen, bzw. während die längenveränderbare Laserstrahlumlenkachse (57) nach Maßgabe des Schnitthalbmessers (r) längenverändert eingestellt ist, und daß der Laserkopf (15) um die zweite Drehachse (8) drehend angetrieben ist.

27. Führungsvorrichtung nach einem der Ansprüche 13 bis 26 dadurch gekennzeichnet, daß die zwischen der Laserkopfschwenkachse (12) und der benachbarten Laserstrahlumlenkachse (13) vorgesehene Drehachse (8) zugleich als Teleskopeinrichtung (55) und damit zugleich als längenveränderbare Bewegungsachse (56) ausgebildet ist.

28. Führungsvorrichtung nach einem der Ansprüche 13 bis 27, dadurch gekennzeichnet, daß bei den auf die zweite Drehachse (8) folgenden oder bei den auf beide Drehachsen (4 ; 8) jeweils folgenden zwei benachbarten parallelen Laserstrahlumlenkachsen (11, 12 ; 13, 14) die beiden auf der betreffenden Drehachse bzw. auf deren gedachter Verlängerung befindlichen Spiegel (20, 37 ; 38, 23) zur Freigabe eines geraden mit der Mittelachse des Laserkopfes (15) und der Drehachsen (8) bzw. den Drehachsen (4 ; 8) fluchtenden Durchgangs für den Laserstrahl gemeinsam parallelverschiebbar angeordnet sind.

29. Führungsvorrichtung nach Anspruch 28, dadurch gekennzeichnet daß die verschiebbaren Spiegel (20, 37 ; 38, 23) für den pneumatischen, hydraulischen oder elektromotorischen Antrieb ausgebildet sind und mit Führungsstangen (58) od. dgl. starr verbunden sind, die verschiebbar in Führungsbuchsen (59) od. dgl. eingreifen.

30. Führungsvorrichtung nach den Ansprüchen 23 und 29, dadurch gekennzeichnet, daß in den Gehäusen der Laserstrahlumlenkachsen (11, 12 ; 13, 14) für den Durchtritt des Laserstrahls bei verschobenen Spiegeln (20, 37 ; 38, 23) Öffnungen (60) vorgesehen sind.

31. Führungsvorrichtung nach Anspruch 30 dadurch gekennzeichnet, daß zwischen jeweils gegenüberliegenden Öffnungen (60) rohrförmige Laserstrahlabdeckungen (66) vorgesehen sind.

32. Führungsvorrichtung nach einem der Ansprüche 13, 19 und 25, dadurch gekennzeichnet, daß für das Schneiden von Durchbrüchen mit wenigstens teilweisem kreisbogenförmigem Verlauf der Schnittkante zur Erzeugung konischer Schnittkanten der Schwenkwinkel (β) an der Laserkopfschwenkachse (12) so eingestellt ist, daß die zweite Drehachse (8) senkrecht zur Werkstückoberfläche ausgerichtet ist, während die Schwenkwinkel (γ, δ) an den beiden zusätzlichen Schwenkachsen (9, 10) nach Maßgabe des Schnitthalbmessers (r) so eingestellt sind, daß die zweite Drehachse (8) und die Mittelachse des Laserkopfes (15) einen dem Konuswinkel entsprechenden Winkel einschließen, und daß der Laserkopf (15) um die zweite Drehachse (8) drehend angetrieben ist.

## Claims

1. Guiding device for a laser beam deflected on a plurality of occasions at 45° mirrors, for three-dimensional workpiece processing, having five controlled movement axes, of which the first and second movement axes are the horizontal coordinate axes X and Y, the third and fourth movement axes are provided coaxially in a vertical telescope device or the like, which is rotatable and the length of which is variable, and the fifth movement axis is a horizontal pivot axis, about which the laser head is pivotable, with effect from the third movement axis a self-supporting construction being provided, characterised in that a further movement axis (5) constructed as a horizontal pivot axis (11) is provided parallel to the laser head pivot axis (14), the distance of which from the laser head pivot axis is greater than the length of the laser head (15), the laser beam deflection at the additional pivot axis (11) being provided so that the central axes of the telescope device (3) and of the laser head (15) are constantly situated in a common vertical plane, and that the pivot angles (α, β) at the additional pivot axis (11) and the laser head pivot axis (14) are programmable and settable in a manner coordinated with one another in dependence upon the position of the workpiece surface to be processed.

2. Guiding device according to Claim 1, characterised in that the pivot angles ($\alpha$, $\beta$) at the horizontal pivot axes (11, 14) are programmed in a manner coordinated with one another, so that the impingement point (27) of the laser beam (17) on the workpiece surface is situated on the imaginary extension of the central axis of the telescope device (3).

3. Guiding device according to Claim 1, characterised in that the pivot angles ($\alpha$, $\beta$) are set so as to be equally large at the laser head pivot axis (14) and the adjacent horizontal pivot axis (11) for the cutting of openings with at least a partial circular-arcuate configuration of the cutting edge (30, 31) in horizontal workpiece regions, and in that, in order to produce the circular-arcuate cut, the telescope device (3) is driven to rotate about its axis of rotation (4).

4. Guiding device according to one of Claims 1 to 3, characterised in that the laser beam (17) is guided between the two pivot axes (11, 14) with the formation of a further movement axis (6) through a further telescope device (16) which is controlled so as to be of variable length.

5. Guiding device for a laser beam deflected on a plurality of occasions at 45° mirrors, for three-dimensional workpiece processing, having five controlled movement axes, of which the first and second movement axes are the horizontal coordinate axes X and Y, the third and fourth movement axes are provided coaxially in a vertical telescope device or the like, which is rotatable and the length of which is variable, and the fifth movement axis is a horizontal pivot axis, about which the laser head is pivotable with effect from the third movement axis a self-supporting construction being provided, characterised in that parallel to the laser head pivot axis (14) three further movement axes (5, 7, 9) constructed as horizontal pivot axes (11, 12, 13) are provided, in the case of which the distance between the first and the second of the pivot axes (11, 12) provided downstream of the telescope device (3) is greater than the sum, multiplied by the length of the laser head (15), of the distances between the second and the third pivot axes (12, 13) and between the third pivot axis (13) and the laser head pivot axis (14), the laser beam deflection at all pivot axes (11-14) being provided so that the central axes of the telescope device (3) and of the laser head (15) are in alignment with one another when the pivot angle has the value zero at all pivot axes and that between the second and third pivot axis (12, 13) a second axis of rotation (8) controlled through 360° is provided.

6. Guiding device according to Claim 5, characterised in that the pivot angles ($\alpha$, $\beta$) at the first and second horizontal pivot axis (11, 12) at a value of the pivot angles at the third pivot axis (13) and the laser head pivot axis (14) of zero are programmed and set in a manner coordinated with one another so that the impingement point (27) of the laser beam (17) on the workpiece surface is situated on the imaginary extension of the central axis of the telescope device (3).

7. Guiding device according to Claim 5, characterised in that for the cutting of openings with at least a partial circular-arcuate configuration of the cutting edge in non-horizontal workpiece regions the pivot angles ($\alpha$, $\beta$) at the first and second pivot axis (11, 12) are set so that the second axis of rotation (8) is oriented perpendicular to the workpiece surface while the pivot angles ($\gamma$, $\delta$) at the third pivot axis (13) and the laser head pivot axis (14) are set in dependence upon the cut radius (r) so that the second axis of rotation (8) and the central axis of the laser head (15) extend parallel, and that the laser head (15) is driven to rotate about the second axis of rotation (8).

8. Guiding device according to one of Claims 5 to 7, characterised in that between the first pivot axis (11) and the second pivot axis (12) the laser beam (17) is guided between these two pivot axes with the formation of a further movement axis (6) by a further telescope device (16) which is controlled so as to be of variable length.

9. Guiding device for a laser beam deflected on a plurality of occasions at 45° mirrors, for three-dimensional workpiece processing, having five controlled movement axes of which the first and second movement axes are the horizontal coordinate axes X and Y, the third and fourth movement axes are provided coaxially in a vertical telescope device or the like which is rotatable and the length of which is variable, and the fifth movement axis is a horizontal pivot axis for the laser head, with effect from the third movement axis a self-supporting construction being provided, characterised in that a further movement axis (5) constructed as horizontal pivot axis (11) is provided parallel to the pivot axis (12) for the laser head (15), in that between the pivot axis (12) for the laser head (15) and the laser head two additional laser beam deflection axes (13', 14') which are horizontal and parallel to the two pivot axes (11, 12) are provided, one of which is constructed as immovable axis and the other as telescope axis (9), in that between the pivot axis (12) for the laser head (15) and the adjacent laser beam deflection axis (13') a second axis of rotation (8) controlled through 360° is provided, in that the distance between the two pivot axes (11, 12) is greater than the sum, multiplied by the length of the laser head (15), of the distances between the pivot axis (12) for the laser head and the laser beam deflection axis (14') adjacent to the laser head, and in that the laser beam deflection at the pivot axes (11, 12) and the two additional laser beam deflection axes (13', 14') is provided so that the central axes of the telescope device (3) and of the laser head (15) are in alignment with one another, when the pivot angle has the value zero at the two pivot axes and the length of the telescope axis has not been altered.

10. Guiding device according to Claim 9, characterised in that the pivot angles (α, β) at the two horizontal pivot axes (11, 12) are programmed in a manner coordinated with one another so that the impingement point (27) of the laser beam (17) on the workpiece surface is situated on the imaginary extension of the central axis of the telescope device (3) when the length of the telescope axis (13' or 14') has not been altered.

11. Guiding device according to Claim 9, characterised in that for the cutting of openings with at least a partial circular-arcuate configuration of the cutting edge in nonhorizontal workpiece regions the pivot angles (α, β) at the two pivot axes (11, 12) are set so that the second axis of rotation (8) is oriented perpendicular to the workpiece surface, while the telescope axis (13' or 14') is set so that its length is altered in dependence upon the cut radius (r) and that the laser head (15) is driven to rotate about the second axis of rotation (8).

12. Guiding device according to one of Claims 9 to 11, characterised in that between the two pivot axes (11, 12) the laser beam (17) is guided with the formation of a further movement axis (6) through a further telescope device (16) which is controlled so that its length is variable.

13. Guiding device for a laser beam deflected on a plurality of occasions at 45° mirrors, for three-dimensional workpiece processing, having a plurality of controlled movement axes, of which the first and second movement axes are the horizontal coordinate axes X and Y, the third and fourth movement axes are provided coaxially in a vertical telescope device or the like which is rotatable and the length of which is variable, and the fifth movement axis is a horizontal pivot axis, about which the laser head is pivotable, with effect from the third movement axis a self-supporting construction being provided, characterised in that at the lower end of the telescope device (3) a horizontal conduit (46) is fitted, into which the laser beam is deflected at a 45° mirror (47), in that a further movement axis (5) constructed as horizontal pivot axis (11) is provided parallel to the laser head pivot axis (12) at the free end of the conduit (46), in that between the laser head pivot axis (12) and the laser head (15) two additional laser beam deflection axes (13, 14) which are horizontal and parallel to the two pivot axes (11, 12) are provided, which either are both constructed as horizontal pivot axes (9, 10), or one of which is constructed as immovable axis and the other as movement axis (57) of variable length, in that between the laser head pivot axis (12) and the adjacent laser beam deflection axis (13) a second axis of rotation (8) controlled through 360° is provided, laser beam deflection at the pivot axes (11, 12) and the two additional laser beam deflection axes (13, 14) is provided so that the central axes of the telescope device (3) and of the laser head (15) are constantly situated in a common vertical plane, when the two additional laser beam deflection axes (13, 14) are not set for the cutting of circular-arcuate openings (Figs. 1-4).

14. Guiding device according to Claim 13, characterised in that the angle settings at the two horizontal pivot axes (11, 12) are programmable in a manner coordinated with one another so that the impingement point (27) of the laser beam (17) on the workpiece surface is situated on the imaginary extension of the central axis of the telescope device (3) when no angle settings have been made at the two additional pivot axes (13, 14), or when the length of the laser beam deflection axis, the length of which is variable, has not been varied.

15. Guiding device according to Claims 13 or 14, characterised in that the distance between the central axis of the telescope device (3) and the further horizontal pivot axis (11) corresponds to the distance between the laser head pivot axis (12) and the impingement point (27) of the laser beam on the workpiece surface.

16. Guiding device according to Claim 13, characterised in that for the cutting of openings with at least a partial circular-arcuate configuration of the cutting edge in all workpiece regions the pivot angles (α, β) at the two pivot axes (11, 12) are set so that the second axis of rotation (8) is oriented perpendicular to the workpiece surface, while the pivot angles (γ, δ) at the two additional pivot axes (9, 10) are set in dependence upon the cut radius (r) so that the second axis of rotation (8) and the central axis of the laser head (15) extend parallel, or while the laser beam deflection axis (57), the length of which is variable, is set so that its length is varied in dependence upon the cut radius (r), and that the laser head (15) is driven to rotate about the second axis of rotation (8).

17. Guiding device according to Claim 16, characterised in that the pivot angles (α, β) at the two pivot axes (11, 12) are set so that the circular-arc centre of the cutting edge is situated on the imaginary extension of the central axis, of the first telescope device (3).

18. Guiding device according to one of Claims 13 to 17, characterised in that between the two pivot axes (11, 12) the laser beam (17) is guided with the formation of a further movement axis (6) through a further telescope device (16), which is controlled so that its length is variable.

19. Guiding device for a laser beam deflected on a plurality of occasions at 45° mirrors, for three-dimensional workpiece processing, having a plurality of controlled movement axes, of which the first and second movement axes are the horizontal coordinate axes X and Y, the third and fourth movement axes are provided coaxially in a vertical telescope device or the like which is rotatable and the length of which is variable, and the fifth movement axis is a horizontal pivot axis, about which the laser head is pivotable with effect from the third movement axis a self-supporting construction being provided, characterised in that, to the lower end of the telescope device (3) there is connected, with the formation of a further horizontal movement axis (48), a second telescope device (49), which is controlled so that its length is variable and into which the laser beam (17) is deflected at a 45° mirror and to which, with the formation of a further vertical movement axis (50), a third telescope device (16), which is controlled so that its length is variable, is connected, into which the laser beam (17) is deflected at a 45° mirror (51), in that at the lower end of the third telescope device (16) a fixed laser beam deflection axis (52) parallel to the laser head pivot axis (12) is provided, from which the laser beam is deflected to the laser head pivot axis (12), in that between the laser head pivot axis (12) and the laser head (15) two additional laser beam deflection axes (13, 14) which are horizontal and parallel to the laser head pivot axis are provided, which either are both constructed as horizontal pivot axes (9, 10) or one of which is constructed as an immoveable axis and the other as a movement axis (57), the length of which is variable, in that between the laser head pivot axis (12) and the adjacent laser beam deflection axis (13) a second axis of rotation (8) which is controlled through 360° is provided, and in that the laser beam deflection at the laser head pivot axis (12) and the three beam deflection axes (52, 13, 14) is provided so that the central axes of the telescope device (3) and of the laser head (15) are constantly situated in a common vertical plane, when the two additional laser beam deflection axes (13, 14) are not set for the cutting of circular-arcuate openings.

20. Guiding device according to Claim 19, characterised in that the second telescope device (49) is settable to a length corresponding to the distance between the laser beam deflection axis (52) at the lower end of the third telescope device (16) and the laser head pivot axis (12), in such a manner that the central axes of the first telescope device (3) and of the laser head (15) are in alignment when no angle settings have been undertaken at the two additional pivot axes (9, 10), or when the length of the laser beam deflection axis (57), the length of which is variable, has not been varied.

21. Guiding device according to Claims 19 or 20, characterised in that the second telescope device (49) is settable to a length which corresponds to the horizontal distance between the laser beam deflection axis (52) at the lower end of the third telescope device (16) and the impingement point (27) of the laser beam on the workpiece surface.

22. Guiding device according to Claim 19, characterised in that for the cutting of openings with at least a partial circular-arcuate configuration of the cutting edge in all workpiece regions the pivot angle (β) at the laser head pivot axis (12) is set so that the second axis of rotation (8) is oriented perpendicular to the workpiece surface, while the pivot angles (γ, δ) at the two additional pivot axes (9, 10) are set in dependence upon the cut radius (r) so that the second axis of rotation (8) and the central axis of the laser head (15) extend parallel, or while the laser beam deflection axis (57), the length of which is variable, is set so that its length is varied in dependence upon the cut radius (r), and that the laser head (15) is driven to rotate about the second axis of rotation (8).

23. Guiding device according to Claims 19 and 22, characterised in that the second telescope device (49) is set for the cutting of openings in horizontal workpiece regions so that the centre of the circle of the cutting edge is situated on the imaginary extension of the central axis of the first telescope device (3).

24. Guiding device according to one of Claims 19 to 21, characterised in that, in place of the third vertical telescope device (16), a deflection of invariable distance between the 45° mirror (51) of the second telescope device (49) and the fixed laser beam deflection axis (52) is provided.

25. Guiding device for a laser beam deflected on a plurality of occasions at 45° mirrors, for three-dimensional workpiece processing, having a plurality of controlled movement axes, of which the first and second movement axes are the horizontal coordinate axes X and Y, the third and fourth movement axes are provided coaxially in a vertical telescope device or the like, which is rotatable and the length of which is variable, and the fifth movement axis is a horizontal pivot axis, about which the laser head is pivotable, with effect from the third movement axis a self-supporting construction being provided, characterised in that to the lower end of the telescope device (3) a laser beam deflection axis (53), which is horizontal, fixed and disposed parallel to the laser head pivot axis (12), is connected, by which the laser beam (17) is deflected to the laser head pivot axis (12), in that between the laser head pivot axis (12) and the laser head (15) two additional laser beam deflection axes (13, 14), which are horizontal and parallel to the laser head pivot axis (12), are provided, which either are both constructed as horizontal pivot axes (9, 10) or one of which is constructed as an immoveable axis and the other as a movement axis (57) the length of which is variable, in that between the laser head pivot axis (12) and the adjacent laser beam deflection axis (13) a second axis of rotation (8) which is controlled through 360° is provided and in that the laser beam deflection at the fixed laser beam deflection axis (53), the laser head pivot axis (12) and the two additional laser beam deflection axes (13, 14) is provided so that the central axes of the telescope device (3) and of the laser head (15) are constantly situated in a common vertical plane, when the two additional laser beam deflection axes (13, 14) are not set for the cutting of circular-arcuate openings.

26. Guiding device according to Claim 25, characterised in that for the cutting of openings with at least a partial circular-arcuate configuration of the cutting edge in all workpiece regions the pivot angle (β) at the laser head pivot axis (12) is set so that the second axis of rotation (8) is oriented perpendicular to the workpiece surface, while the pivot angles (γ, δ) at the two additional pivot axes (9, 10) are set in dependence upon the cut radius (r), so that the second axis of rotation (8) and the central axis of the laser head (15) extend parallel, or while the laser beam deflection axis (57) the length of which is variable, is set so that its length is varied in dependence upon the cut radius (r) and that the laser head (15) is driven to rotate about the second axis of rotation (8).

27. Guiding device according to one of Claims 13 to 26, characterised in that the axis of rotation (8), which is provided between the laser head pivot axis (12) and the adjacent laser beam deflection axis (13), is constructed at the same time as telescope device (55) and thus at the same time as movement axis (56), the length of which is variable.

28. Guiding device according to one of Claims 13 to 27, characterised in that at the two adjacent parallel laser beam deflection axes (11, 12 ; 13, 14), which follow the second axis of rotation (8) or at the two adjacent parallel laser beam deflection axes (11, 12 ; 13, 14) following in each instance both axes of rotation (4 ;8), the two mirrors (20, 37 ; 38, 23) situated on the pertinent axis of rotation or on its imaginary extension are disposed to clear a straight passage, in alignment with the central axis of the laser head (15) and the axis of rotation (8) or the axes of rotation (4 ; 8), for the laser beam, so as to be displaceable parallel in common.

29. Guiding device according to Claim 28, characterised in that the displaceable mirrors (20, 37 ; 38, 23) are designed for the pneumatic, hydraulic or electric-motor drive, and are rigidly connected to guiding rods (58) or the like, which displaceably engage into guide bushes (59) or the like.

30. Guiding device according to Claims 28 and 29, characterised in that apertures (60) are provided in the housings of the laser beam deflection axes (11, 12 ; 13, 14) for the passage of the laser beam when the mirrors (20, 37 ; 38, 23) are displaced.

31. Guiding device according to Claim 30, characterised in that tubular laser beam covers (66) are provided between respectively opposite apertures (60).

32. Guiding device according to one of Claims 13, 19 and 25, characterised in that for the cutting of openings with at least a partial circular-arcuate configuration of the cutting edge for the production of conical cutting edges the pivot angle (β) at the laser head pivot axis (12) is set so that the second axis of rotation (8) is oriented perpendicular to the workpiece surface, while the pivot angles (γ, δ) at the two additional pivot axes (9, 10) are set in dependence upon the cut radius (r) so that the second axis of rotation (8) and the central axis of the laser head (15) include an angle corresponding to the angle of the cone, and that the laser head (15) is driven to rotate about the second axis of rotation (8).

**Revendications**

1. Dispositif de guidage pour un faisceau laser dévié plusieurs fois sur des miroirs à 45° pour l'usinage en trois dimensions de pièces d'oeuvre, avec cinq axes de déplacement commandés, le premier et le second de ces axes de déplacement étant les axes de coordonnées horizontaux X et Y, le troisième et le quatrième axe de déplacement étant réalisés coaxialement dans un dispositif télescopique vertical ou un dispositif analogue, susceptible de tourner et d'être modifié en longueur, et le cinquième axe de déplacement est un axe de pivotement horizontal autour duquel la tête laser est susceptible de pivoter, tandis qu'à partir du troisième axe de pivotement, il est prévu une réalisation auto-porteuse, dispositif caractérisé en ce qu'un autre axe de déplacement (5) revêtant la forme d'un axe de pivotement horizontal (11) est prévu parallèlement à l'axe (14) de pivotement de la tête laser, sa distance à cet axe de pivotement de la tête laser étant supérieure à la longueur de la tête laser (15), la déviation du faisceau laser sur cet axe de pivotement supplémentaire (11) étant prévue de façon que les axes médians du dispositif télescopique (3) et de la tête laser (15) se trouvent constamment dans un plan vertical commun, tandis que les angles de pivotement (α, β) sur l'axe de pivotement supplémentaire (11) et l'axe de pivotement de la tête laser (14) sont susceptibles d'être programmés et réglés en accord l'un par rapport à l'autre selon la position de la surface de la pièce d'oeuvre à usiner.

2. Dispositif de guidage selon la revendication 1, caractérisé en ce que les angles de pivotement (α, β) sur les axes de pivotement horizontaux (11, 14) sont programmés en accord l'un par rapport à l'autre de façon que le point d'incidence (27) du faisceau laser (17) sur la surface de la pièce d'oeuvre, se trouve sur le prolongement supposé de l'axe médian du dispositif télescopique (3).

3. Dispositif de guidage selon la revendication 1, caractérisé en ce que les angles de pivotement (α, β) pour la découpe d'ajours avec un tracé au moins partiellement en forme d'arc de cercle des bords de découpe (30, 31) dans des zones horizontales de la pièce d'oeuvre, sont réglés à la même valeur sur l'axe de pivotement de la tête laser (14) et sur l'axe horizontal de pivotement voisin (11), tandis que pour obtenir la coupe en forme d'arc de cercle le dispositif télescopique (3) est entraîné en rotation autour de son axe de rotation (4).

4. Dispositif de guidage selon une des revendications 1 à 3, caractérisé en ce que le faisceau laser (17) est guidé entre les deux axes de pivotement (11, 14) en formant un autre axe de déplacement (6) par l'intermédiaire d'un autre dispositif télescopique commandé (16) dont la longueur est susceptible d'être modifiée.

5. Dispositif de guidage pour un faisceau laser dévié plusieurs fois sur les miroirs à 45° pour l'usinage en trois dimensions de pièces d'oeuvre, avec cinq axes de déplacement commandés, le premier et le second de ces axes de déplacement étant les axes de coordonnées horizontaux X et Y, le troisième et le quatrième axes de déplacement étant réalisés coaxialement dans un dispositif télescopique ou un dispositif analogue vertical et susceptible de tourner et d'être modifié en longueur, et le cinquième axe de déplacement étant un axe de pivotement horizontal autour duquel la tête laser est susceptible de pivoter, tandis qu'à partir du troisième axe de déplacement, il est prévu une réalisation auto-porteuse, dispositif caractérisé en ce que, parallèlement à l'axe de pivotement (14) de la tête laser, il est prévu trois autres axes de déplacement (5, 7, 9) revêtant la forme d'axes de pivotement horizontaux (11, 12, 13) dans le cas desquels la distance entre le premier et le second (11, 12) des axes de pivotement faisant suite au dispositif télescopique (3) est supérieure à la somme, augmentée de la longueur de la tête laser (15), des distances entre le second et le troisième axe de pivotement (12, 13) et entre le troisième axe de pivotement (13) et l'axe de pivotement (14) de la tête laser, la déviation du faisceau laser sur tous les axes de pivotement (11 à 14) étant prévue de façon que les axes médians du dispositif télescopique (3) et de la tête laser (15) soient alignés l'un sur l'autre, lorsque sur tous les axes de pivotement l'angle de pivotement a la valeur zéro, tandis qu'entre le second et le troisième axe de pivotement (12, 13), il est prévu un second axe de rotation (8) commandé sur 360°.

6. Dispositif de guidage selon la revendication 5, caractérisé en ce que les angles de pivotement (α, β) sur le premier et sur le second axe de pivotement horizontaux (11, 12), pour une valeur zéro de l'angle de pivotement sur le troisième axe de pivotement (13) et sur l'axe de pivotement de la tête laser (14), sont programmés et réglés en étant accordés l'un sur l'autre de façon que le point d'incidence (27) du faisceau laser (17) sur la surface de la pièce d'oeuvre, se trouve sur le prolongement supposé de l'axe médian du dispositif télescopique.(3).

7. Dispositif de guidage selon la revendication 5, caractérisé en ce que pour la découpe d'ajours avec un tracé au moins partiellement en forme d'arc de cercle des bords de découpe, dans des zones non horizontales de la pièce d'oeuvre, les angles de pivotement (α, β) sur le premier et le second axe de pivotement (11, 12) sont réglés de façon que le deuxième axe de rotation (8) soit orienté perpendiculairement par rapport à la surface de la pièce d'oeuvre, tandis que les angles de pivotement (γ, δ) sur le troisième axe de pivotement (13) et sur l'axe de pivotement de la tête laser (14) sont réglés selon le rayon (r) de la découpe de façon que le second axe de rotation (8) et l'axe médian de la tête laser (15) s'étendent parallèlement, et que la tête laser (15) soit entraînée en rotation autour du second axe de rotation (8).

8. Dispositif de guidage selon une des revendications 5 à 7, caractérisé en ce qu'entre le premier axe de pivotement (11) et le second axe de pivotement (12), le faisceau laser (17) est guidé entre ces deux axes de pivotement en formant un autre axe de déplacement (6) par l'intermédiaire d'un autre dispositif télescopique commandé (16) susceptible d'être modifié en longueur.

9. Dispositif de guidage pour un faisceau laser dévié plusieurs fois sur les miroirs à 45° pour l'usinage en trois dimensions de pièces d'oeuvre, avec cinq axes de déplacement commandés, le premier et le second de ces axes de déplacement étant les axes de coordonnées horizontaux X et Y, le troisième et le quatrième axe de déplacement étant réalisés coaxialement dans un dispositif télescopique ou analogue vertical susceptible d'être mis en rotation et d'être modifié en longueur, et le cinquième axe de déplacement étant un axe de pivotement horizontal pour la tête laser, tandis qu'à partir du troisième axe de déplacement, il est prévu une réalisation auto-porteuse, dispositif caractérisé en ce que :

— il est prévu un autre axe de déplacement (5) revêtant la forme d'un axe de pivotement horizontal (11) parallèle à l'axe de pivotement (12) pour la tête laser,

— entre l'axe de pivotement (12) pour la tête laser (15) et cette tête laser, il est prévu deux axes supplémentaires (13', 14'), horizontaux et parallèles aux deux axes de pivotement (11, 12), l'un de ces axes de déviation étant un axe immobile, tandis que l'autre est réalisé sous la forme d'un axe télescopique (9)

— entre l'axe de pivotement (12) pour la tête laser (15) et l'axe voisin de déviation du faisceau laser (13'), il est prévu un second axe de rotation (8) commandé sur 360°,

— la distance entre les deux axes de pivotement (11, 12) est supérieure à la somme, augmentée de la longueur de la tête laser (15), des distances entre l'axe de pivotement (12) pour la tête laser et l'axe de déviation du faisceau laser (14') voisin de la tête laser,

— la déviation du faisceau laser sur les axes de pivotement (11, 12) et sur les deux axes supplémentaires de déviation du faisceau laser (13', 14') est prévue de façon que les axes médians du dispositif télescopique (3) et de la tête laser (15) soient alignés, lorsque sur les deux axes de pivotement, l'angle de pivotement a la valeur zéro et que la longueur de l'axe télescopique n'est pas modifiée.

10. Dispositif de guidage selon la revendication 9, caractérisé en ce que les angles de pivotement (α, β) sur les deux axes de pivotement horizontaux (11, 12) sont programmés en étant accordés l'un à l'autre de façon que le point d'incidence (27) du faisceau laser (17) sur la surface de la pièce d'oeuvre se trouve sur le prolongement supposé de l'axe médian du dispositif télescopique (3), lorsque la longueur de l'axe télescopique (13' ou bien 14') n'est pas modifiée.

11. Dispositif de guidage selon la revendication 9, caractérisé en ce que pour la découpe d'ajours avec un tracé au moins partiellement en forme d'arc de cercle des bords de découpe dans des zones non horizontales de la pièce d'oeuvre, les angles de pivotement (α, β) sur les deux axes de pivotement (11, 12) sont réglés de façon que le second axe de rotation (8) soit orienté perpendiculairement à la surface de la pièce d'oeuvre, tandis que l'axe télescopique (13' ou bien 14') est réglé par modification de sa longueur selon le rayon de découpe (r), et que la tête laser (15) est entraînée en rotation autour du second axe de rotation (8).

12. Dispositif de guidage selon une des revendications 9 à 11, caractérisé en ce qu'entre les deux axes de pivotement (11, 12) le faisceau laser (17) est guidé en formant un autre axe de déplacement (6) par l'intermédiaire d'un autre dispositif télescopique commandé (16) dont la longueur peut être modifiée.

13. Dispositif de guidage pour un faisceau laser dévié plusieurs fois sur des miroirs à 45° pour l'usinage en trois dimensions de pièces d'oeuvre, avec plusieurs axes de déplacement commandés, le premier et le second de ces axes de déplacement étant les axes de coordonnées horizontaux X et Y, le troisième et le quatrième axes de déplacement étant réalisés coaxialement dans un dispositif télescopique vertical ou un dispositif analogue, susceptible de tourner et d'être modifié en longueur, et le cinquième axe de déplacement est un axe de pivotement horizontal autour duquel la tête laser est susceptible de pivoter, tandis qu'à partir du troisième axe de déplacement, il est prévu une réalisation autoporteuse, dispositif caractérisé en ce que :

— à l'extrémité inférieure du dispositif télescopique (3) est rapporté un tube directeur horizontal (46) dans lequel le faisceau laser est dévié sur un miroir à 45° (47),

— Il est prévu à l'extrémité libre du tube directeur (46) un autre axe de déplacement (5) revêtant la forme d'un axe de pivotement horizontal (11) parallèle à l'axe de pivotement (12) de la tête laser,

— entre l'axe de pivotement (12) de la tête laser et la tête laser (15) il est prévu deux axes supplémentaires de déviation (13, 14) du faisceau laser, horizontaux et parallèles aux deux axes de pivotement (11, 12), qui, ou bien sont tous deux réalisés sous la forme d'axes de pivotement horizontaux (9, 10), ou bien l'un de ces axes est un axe immobile et l'autre est réalisé sous la forme d'un axe de déplacement (57) dont la longueur peut être modifiée,

— entre l'axe de pivotement de la tête laser (12) et l'axe de déviation voisin (13) du faisceau laser, il est prévu un second axe de rotation (8) commandé sur 360°,

— la déviation du faisceau laser sur les axes de pivotement (11, 12) et les deux axes de déviation supplémentaires (13, 14) est prévue de façon que les axes médians du dispositif télescopique (3) et de la tête laser (15) se trouvent constamment dans un plan vertical commun lorsque les deux axes de déviation supplémentaires (13, 14) du faisceau laser ne sont pas réglés pour découper des ajours en forme d'arc de cercle (figures 1 à 4).

14. Dispositif de guidage selon la revendication 13, caractérisé en ce que les réglages des angles sur les deux axes de pivotement horizontaux (11, 12) sont susceptibles d'être programmés en étant accordés l'un à l'autre, de façon que le point d'incidence (27) du faisceau laser (17) sur la surface de la pièce d'oeuvre, se trouve sur le prolongement supposé de l'axe médian du dispositif télescopique (3), lorsque aucun réglage d'angle n'est effectué sur les deux axes de pivotement supplémentaires (13, 14) ou bien lorsque l'axe de déviation modifiable en longueur du faisceau laser, n'est pas modifié en longueur.

15. Dispositif de guidage selon les revendications 13 ou 14, caractérisé en ce que la distance entre l'axe médian du dispositif télescopique (3) et l'autre axe horizontal de pivotement (11) correspond à la distance entre l'axe de pivotement de la tête laser (12) et le point d'incidence (27) du faisceau laser sur la surface de la pièce d'oeuvre.

16. Dispositif de guidage selon la revendication 13, caractérisé en ce que pour la découpe d'ajours avec un tracé au moins partiellement en forme d'arc de cercle des bords de découpe sur toutes les zones de la pièce d'oeuvre, les angles de pivotement (α, β) sur les deux axes de pivotement (11, 12) sont réglés de façon que le second axe de rotation (8) soit orienté perpendiculairement à la surface de la pièce d'oeuvre, tandis que les angles de pivotement (γ, δ) sur les deux axes de pivotement supplémentaires (9, 10) sont réglés de façon telle selon le rayon de découpe (r) que le second axe de rotation (8) et l'axe médian de la tête laser (15) soient parallèles, ou bien que l'axe de déviation réglable en longueur (57) du faisceau laser est réglé par modification de sa longueur selon le rayon de découpe (r), et que la tête laser (15) est entraînée en rotation autour du second axe de rotation (8).

17. Dispositif de guidage selon la revendication 16, caractérisé en ce que les angles de pivotement (α, β) sur les deux axes de pivotement (11, 12) sont réglés de façon que le centre de l'arc de cercle du bord de découpe se trouve sur le prolongement supposé de l'axe médian du premier dispositif télescopique (3).

18. Dispositif de guidage selon une des revendications 13 à 17, caractérisé en ce que, entre les deux axes de pivotement (11, 12) le faisceau laser (17) est guidé en formant un autre axe de déplacement (6) par l'intermédiaire d'un autre dispositif télescopique commandé (16) réglable en longueur.

19. Dispositif de guidage pour un faisceau laser dévié plusieurs fois sur les miroirs à 45° pour l'usinage en trois dimensions de pièces d'oeuvre, avec plusieurs axes de déplacement commandés, le premier et le second de ces axes de déplacement étant les axes de coordonnées horizontaux X et Y, le troisième et le quatrième axe de déplacement étant réalisés coaxialement dans un dispositif télescopique vertical ou un autre dispositif analogue, susceptible de tourner et d'être modifié en longueur, et le cinquième axe de déplacement est un axe de pivotement horizontal autour duquel la tête laser est susceptible de pivoter, tandis qu'à partir du troisième axe de déplacement, il est prévu une réalisation autoporteuse, dispositif caractérisé en ce que :

— à l'extrémité inférieure du dispositif télescopique (3) est raccordé, en formant un autre axe de déplacement horizontal (48), un second dispositif télescopique commandé (49) modifiable en longueur, dans lequel le faisceau laser (17) est dévié sur un miroir à 45° (47) et auquel est raccordé, en formant un autre axe de déplacement vertical (50), un troisième dispositif télescopique commandé (16) de longueur modifiable, dans lequel le faisceau laser (17) est dévié sur un miroir à 45° (51),

— à l'extrémité inférieure du troisième dispositif télescopique (16) est prévu un axe de déviation (52) du faisceau laser, fixe et parallèle à l'axe de pivotement (12) de la tête laser, et par lequel le faisceau laser est dévié par rapport à l'axe de pivotement (12) de la tête laser,

— entre l'axe de pivotement (12) de la tête laser et la tête laser (15) il est prévu deux axes de déviation supplémentaires (13, 14) du faisceau laser, horizontaux et parallèles à l'axe de pivotement de la tête laser, qui sont réalisés tous les deux sous la forme d'axes de pivotement horizontaux (9, 10) ou bien dont l'un est réalisé sous la forme d'un axe immobile, tandis que l'autre est réalisé sous la forme d'un axe de déplacement (57) modifiable en longueur,

— entre l'axe de pivotement (12) de la tête laser et l'axe de déviation voisin (13) du faisceau laser, il est prévu un second axe de rotation (8) commandé sur 360°,

— la déviation du faisceau laser sur l'axe de pivotement de la tête laser (12) et les trois axes de pivotement du faisceau laser (52, 13, 14) est prévue de façon que les axes médians du dispositif télescopique (3) et de la tête laser (15) se trouvent constamment dans un plan vertical commun lorsque les deux axes supplémentaires de déviation (13, 14) du faisceau laser, ne sont pas réglés pour découper des ajours en forme d'arc de cercle.

20. Dispositif de guidage selon la revendication 19, caractérisé en ce que le second dispositif télescopique (49) est réglable à une longueur correspondant à la distance entre l'axe de déviation (52) du faisceau laser à l'extrémité inférieure du troisième dispositif télescopique (16) et l'axe de pivotement de la tête laser (12), de sorte que les axes médians du premier dispositif télescopique (3) et de la tête laser (15) sont alignés, lorsqu'il n'est pas effectué de réglage angulaire sur les deux axes supplémentaires de pivotement (9, 10) ou bien lorsque l'axe de déviation (57) du faisceau laser, dont la longueur est susceptible d'être modifiée, n'est pas modifié en longueur.

21. Dispositif de guidage selon les revendications 19 ou 20, caractérisé en ce que le second dispositif télescopique (49) est susceptible d'être réglé à une longueur qui correspond à la distance horizontale entre l'axe de déviation (52) du faisceau laser à l'extrémité inférieure du troisième dispositif télescopique (16) et le point d'incidence (27) du faisceau laser sur la surface de la pièce d'oeuvre.

22. Dispositif de guidage selon la revendication 19, caractérisé en ce que pour la découpe d'ajours avec un tracé au moins partiellement en forme d'arc de cercle du bord de découpe sur toutes les zones de la pièce d'oeuvre, l'angle de pivotement (β) sur l'axe de pivotement (12) de la tête laser, est réglé de sorte que le deuxième axe de rotation (8) soit dirigé perpendiculairement à la surface de la pièce d'oeuvre, tandis que les angles de pivotement (γ, δ) sur les deux axes de pivotement supplémentaires (9, 10) sont réglés, selon le rayon (r) de la découpe de façon que le second axe de rotation (8) et l'axe médian de la tête laser (15) soient parallèles, ou bien que l'axe de déviation du faisceau laser (57) dont la longueur est susceptible d'être modifiée, soit réglé par modification de sa longueur et que la tête laser (15) soit entraînée en rotation autour du second axe de rotation (8).

23. Dispositif de guidage selon les revendications 19 à 22, caractérisé en ce que le second dispositif télescopique (49) pour découper des ajours dans les zones horizontales de la pièce d'oeuvre, est réglé de sorte que le centre du bord de découpe se trouve sur le prolongement supposé de l'axe médian du premier dispositif télescopique (3).

24. Dispositif de guidage selon une des revendications 19 à 21, caractérisé en ce qu'au lieu du troisième dispositif télescopique vertical (16), il est prévu une déviation sans modification de distance entre le miroir à 45° (51) du second dispositif télescopique (49) et l'axe fixe de déviation du faisceau laser (52).

25. Dispositif de guidage pour un faisceau laser dévié plusieurs fois sur des miroirs à 45° pour l'usinage en trois dimensions de pièces d'oeuvre, avec plusieurs axes de déplacement commandés, le premier et le second de ces axes de déplacement étant les axes de coordonnées horizontaux X, Y, le troisième et le quatrième axe de déplacement étant réalisés co-axialement dans un dispositif télescopique vertical ou un dispositif analogue, susceptible de tourner et d'être modifié en longueur et le cinquième axe de déplacement étant un axe de pivotement horizontal autour duquel la tête laser est susceptible de pivoter, tandis qu'à partir du troisième axe de déplacement, il est prévu une réalisation autoporteuse, dispositif caractérisé en ce que :

— à l'extrémité inférieure du dispositif télescopique (3) est raccordé un axe de déviation du faisceau laser (53) disposé à poste fixe et parallèlement à l'axe de pivotement de la tête laser (12), axe de déviation grâce auquel le faisceau laser (17) est dévié par rapport à l'axe de pivotement (12) de la tête laser,

— entre l'axe de pivotement (12) de la tête laser et la tête laser (15), il est prévu deux axes supplémentaires de déviation du faisceau laser (13, 14), horizontaux et parallèles à l'axe de pivotement (12) de la tête laser, et qui, ou bien sont tous deux réalisés sous la forme d'axes de pivotement horizontaux (9, 10), ou bien l'un est un axe immobile, et l'autre est réalisé sous la forme d'un axe de déplacement (57) dont la longueur est susceptible d'être modifiée,

— entre l'axe de pivotement de la tête laser (12) et l'axe de déviation voisin (13) du faisceau laser il est prévu un second axe de rotation (8) commandé sur 360°,

— la déviation du faisceau laser sur l'axe de déviation fixe (53) du faisceau laser, sur l'axe de pivotement de la tête laser (12) et sur les deux axes supplémentaires de déviation du faisceau laser (13, 14) est prévue, de sorte que les axes médians du dispositif télescopique (3) et de la tête laser (15) se trouvent constamment dans un plan vertical commun lorsque les deux axes de déviation supplémentaires du faisceau laser (13, 14) ne sont pas réglés pour la découpe d'ajours de forme en arc de cercle.

26. Dispositif de guidage selon la revendication 25, caractérisé en ce que pour la découpe d'ajours avec un tracé au moins partiellement en forme d'arc de cercle du bord de découpe sur toutes les zones de la pièce d'oeuvre, l'angle de pivotement ($\beta$) sur l'axe de pivotement de la tête laser (12) est réglé de façon que le second axe de rotation (8) soit orienté perpendiculairement à la surface de la pièce d'oeuvre, tandis que les angles de pivotement ($\gamma$, $\delta$) sur les deux axes supplémentaires de pivotement (9, 10) sont réglés selon le rayon de découpe (r) de façon que le second axe de rotation (8) et l'axe médian de la tête laser (15) soient parallèles, ou bien que l'axe de déviation du faisceau laser (57) de longueur modifiable soit réglé selon le rayon (r) de la découpe en modifiant sa longueur, et que la tête laser (15) soit entraînée en rotation autour du second axe de rotation (8).

27. Dispositif de guidage selon une des revendications 13 à 26, caractérisé en ce que l'axe de rotation (8) prévu entre l'axe de pivotement de la tête laser (12) et l'axe de déviation voisin (13) du faisceau laser, est en même temps réalisé sous la forme d'un dispositif télescopique (55) et est donc en même temps réalisé sous la forme d'un axe de déplacement (56) de longueur modifiable.

28. Dispositif de guidage selon une des revendications 13 à 27, caractérisé en ce que dans le cas des deux axes voisins parallèles de déviation du faisceau laser (11, 12 ; 13, 14), venant à la suite du second axe de rotation (8), ou bien venant respectivement à la suite des deux axes de rotation (4 ; 8), les deux miroirs (20, 37 ; 38, 23) se trouvant sur l'axe de rotation concerné ou bien sur son prolongement supposé, sont disposés de façon à pouvoir être déplacés parallèlement afin de libérer pour le faisceau laser un passage rectiligne aligné avec l'axe médian de la tête laser (15) et l'axe de rotation (8) ou bien les axes de rotation (4 ; 8).

29. Dispositif de guidage selon la revendication 28, caractérisé en ce que les miroirs susceptibles d'être déplacés (20, 37 ; 38, 23) sont prévus pour être entraînés pneumatiquement, hydrauliquement ou bien par des moteurs électriques, et sont solidaires de tiges de guidage (58) ou de dispositifs de guidage analogues, sont en prise de façon a pouvoir coulisser, dans des douilles de guidage (59) ou dans des organes de guidage analogues.

30. Dispositif de guidage selon les revendications 28 et 29, caractérisé en ce qu'il est prévu dans les boîtiers des axes de déviation du faisceau laser (11, 12 ; 13, 14) dès orifices (60) pour le passage du faisceau laser lorsque les miroirs (20, 37 ; 38, 23) sont déplacés.

31. Dispositif de guidage selon la revendication 30, caractérisé en ce qu'il est prévu, entre les orifices (60) se faisant respectivement face, des recouvrements de forme tubulaire (66) du faisceau laser.

32. Dispositif de guidage selon une des revendications 13, 19 et 25, caractérisé en ce que pour la découpe d'ajours avec un tracé au moins partiellement en forme d'arc de cercle du bord de découpe, afin d'obtenir des bords de découpe coniques, l'angle de pivotement ($\beta$) sur l'axe de pivotement de la tête laser (12) est réglé de sorte que le second axe de rotation (8) soit orienté perpendiculairement à la surface de la pièce d'oeuvre, tandis que les angles de pivotement ($\gamma$, $\delta$) sur les deux axes supplémentaires de pivotement (9, 10) sont réglés selon le rayon de découpe (r) de façon que le second axe de rotation (8) et l'axe médian de la tête laser (15) délimitent un angle correspondant à l'angle du cône, et que la tête laser (15) soit entraînée en rotation autour du second axe de rotation (8).

Fig. 1

*Fig. 2*

*Fig. 3*

2

*Fig. 2a*

Fig. 4

EP 0 185 233 B1

Fig. 5

Fig. 6

*Fig. 7*

Fig. 8

Fig. 9

Fig. 10

EP 0 185 233 B1

Fig. 11

Fig. 12

Fig. 13

Fig. 14

EP 0 185 233 B1

Fig. 15

Fig. 16

Fig. 17

Fig. 18

Fig. 19

13

Fig. 20

Fig. 21

Fig. 22

Fig. 23

Fig. 24

Fig. 25

Fig. 26

Fig. 27

Fig. 28

Fig. 29